# EUROPEAN PATENT APPLICATION

(11) **EP 3 893 086 A1**
(43) Date of publication of application: **13.10.2021**
(21) Application number: 19891714.8
(22) Date of filing: 27.09.2019
(51) Int. Cl.: G06F 3/01, G06F 3/16, G08B 21/02, G08B 21/24, G08B 25/00, G10L 13/00, G10L 15/10

(54) **INFORMATION PROCESSING DEVICE AND INFORMATION PROCESSING METHOD**

(30) Priority: 04.12.2018 JP 2018227298
(71) Applicant: Sony Corporation, 108-0075 Tokyo (JP)
(72) Inventor: KAWANO, Shinichi, Tokyo 108-0075 (JP)
(74) Representative: 2SPL Patentanwälte PartG mbB
(86) International application number: PCT/JP2019/038072
(87) International publication number: WO 2020/116002

(57) **Abstract**

An information processing device includes a converting unit that converts surrounding information, which is generated based on sensor information coming from a sensor unit and which represents primary information regarding the surrounding situation of a first user, into relative information, which represents secondary information corresponding to the user characteristics of the first user, based on the user characteristics.

## Description

### Field

The application concerned is related to an information processing device and an information processing method.

### Background

Conventionally, a technology is known for estimating the distance to an indicated object, which is specified by an indicating action such as the voice of the indicating person, from the indicating person. For example, in Patent Literature 1 is disclosed a technology that focuses on the demonstrative pronoun such as "this" or "that" included in the input details that are input from the voice of the indicating person, and converts the demonstrative pronoun into distance information indicating the distance from the indicating person to the indicated object.

### Citation List

### Patent Literature

Patent Literature 1: JP 2009-26158 A

### Summary

### Technical Problem

Meanwhile, if a user other than the indicating person is present around the indicating person, then the distance information about the distance from the indicating person to the indicated object can be valuable to that other user too. For that reason, there is a demand for a technology that would enable the concerned user to recognize surrounding information which represents information regarding the surrounding situation of that user, such as the distance information. However, the technology disclosed in Patent Literature 1 is meant for substituting the general sense of distance, which is indicated by the demonstrative pronoun, with the distance information. Hence, as far as enabling a user other than the indicating person to recognize the distance information in an easy-to-understand manner is concerned, there is room for improvement.

The application concerned is made in view of the issues mentioned above, and it is an objective of the application concerned to provide an information processing device and an information processing method that enable presentation of surrounding information, which is related to the surrounding situation of a user, to the user in an easy-to-understand manner.

### Solution to Problem

According to the present disclosure, an information processing device includes a converting unit that converts surrounding information, which is generated based on sensor information coming from a sensor unit and which represents primary information regarding surrounding situation of a first user, into relative information, which represents secondary information corresponding to user characteristics of the first user, based on the user characteristics.

Moreover, according to the present disclosure, an information processing method includes converting surrounding information, which is generated based on sensor information coming from a sensor unit and which represents primary information regarding surrounding situation of a first user, into relative information, which represents secondary information corresponding to user characteristics of the first user, based on the user characteristics.

### Brief Description of Drawings

FIG. 1 is a diagram illustrating a configuration of an information processing system 1 according to a first embodiment of the application concerned.
FIG. 2 is a block diagram illustrating a configuration of an information processing device 10 and a server 20 according to the first embodiment of the application concerned.
FIG. 3 is a diagram illustrating a user characteristic database DB1.
FIG. 4 is a block diagram illustrating a configuration of a recognizing unit 210 according to the first embodiment of the application concerned.
FIG. 5 is a diagram illustrating a situation according to the first embodiment of the application concerned.
FIG. 6 is a flowchart for explaining an example of the operations performed in the information processing system 1 according to the first embodiment of the application concerned.
FIG. 7 is a flowchart for explaining a relative information generation operation.
FIG. 8 is a flowchart for explaining a relative information notification operation.
FIG. 9 is a diagram for explaining object information about a second cup 405 as generated by an integrating unit 216.
FIG. 10 is a diagram illustrating the object information about the second cup 405 and illustrating relative information generated by a converting unit 131.
FIG. 11 is diagram illustrating the situation in which an output unit 140 outputs the relative information.
FIG. 12 is a diagram for explaining the situation according to a second embodiment of the application concerned.
FIG. 13 is a block diagram illustrating a configuration of an information processing system 2 according to the second embodiment of the application concerned.
FIG. 14 is a block diagram illustrating a configuration of a recognizing unit 230 according to the second embodiment of the application concerned.
FIG. 15 is a flowchart for explaining the operations performed in the information processing system 2 according to the second embodiment of the application concerned.
FIG. 16 is a flowchart for explaining a determination operation for determining the utterance of a reference term.
FIG. 17 is a diagram illustrating a situation in which an information processing device 11 according to the second embodiment notifies the relative information.
FIG. 18 is a diagram illustrating a situation according to a first application example.
FIG. 19 is a diagram illustrating a holding rule database DB2 according to a second application example.
FIG. 20 is a diagram illustrating a situation according to the second application example.
FIG. 21 is a diagram illustrating a configuration of an information processing system 3 according to a third application example.
FIG. 22 is a functional block diagram illustrating an exemplary hardware configuration of the information processing device 10 that constitutes the information processing system 1 according to the embodiments of the application concerned.

### Description of Embodiments

Preferred embodiments of the application concerned are described below in detail with reference to the accompanying drawing. In the present written description and the drawings, the constituent elements having practically identical functional configuration are referred to by the same reference numerals, and the explanation is not given repeatedly.

The explanation is given in the following sequence.
1. First embodiment
   1.1. Overall configuration of information processing system
   1.2. Configuration of information processing device and server
   1.3. Example of operations
   1.4. Effect
2. Second embodiment
   2.1. Configuration of information processing device and server
   2.2. Example of operations
   2.3. Effect
3. Application examples
   3.1. First application example
   3.2. Second application example
   3.3. Third application example
4. Hardware configuration
5. Supplementary explanation

### <1. First embodiment>

### <<1.1. Overall configuration of information processing system>>

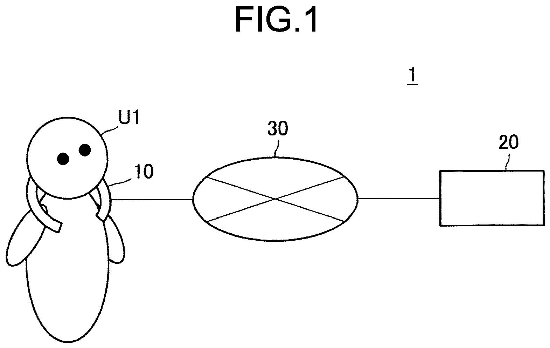

Firstly, explained below with reference to FIG. 1 is a configuration of an information processing system 1 according to a first embodiment of the application concerned. FIG. 1 is a diagram illustrating a configuration of the information processing system 1 according to the first embodiment of the application concerned. The information processing system 1 includes an information processing device 10 and a server 20. Herein, the information processing device 10 and the server 20 are connected to each other by, for example, a network 30. The information processing device 10 according to the first embodiment is worn by a user U1 around the neck. Meanwhile, the information processing device 10 and the server 20 can be connected to each other in a wireless manner or a wired manner.

### <<1.2. Configuration of information processing device and server>>

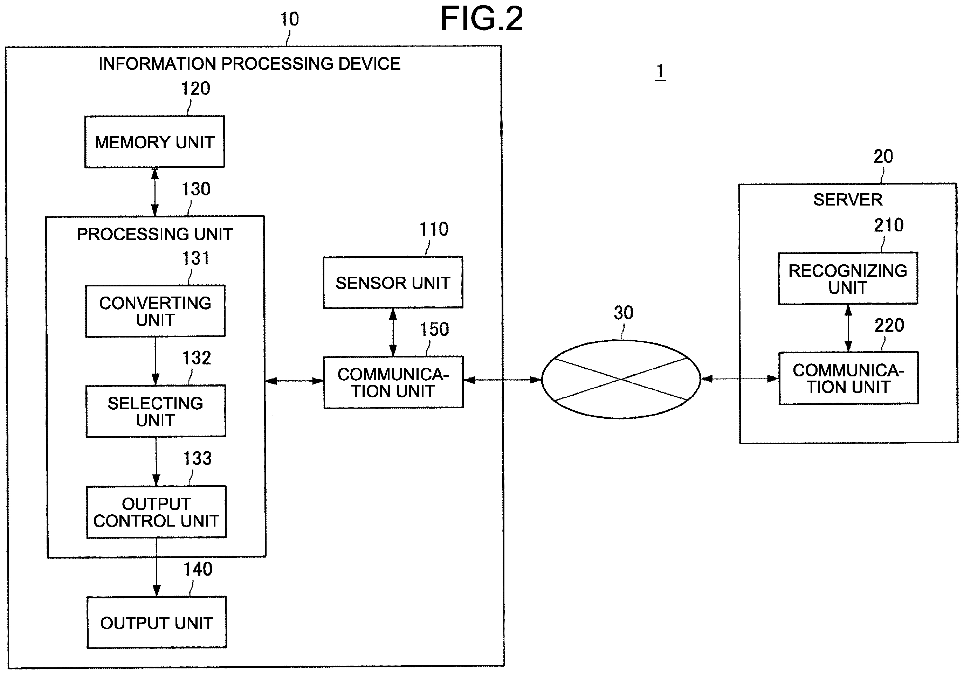

Explained below with reference to FIG. 2 is the detailed explanation of a configuration of the information processing device 10 and the server 20. FIG. 2 is a block diagram illustrating a configuration of the information processing device 10 and the server 20 included in the information processing system 1 according to the first embodiment of the application concerned.

### (Information processing device)

The information processing device 10 has the function of converting surrounding information, which is generated based on sensor information received from a sensor unit 110 and which represents primary information regarding the surrounding situation of the user U1, into relative information, which represents secondary information corresponding to the user characteristics of the user U1, based on those user characteristics. That function is implemented as a result of cooperation among the sensor unit 110, a memory unit 120, a processing unit 130, an output unit 140, and a communication unit 150 that are included in the information processing device 10. Given below is the explanation of the functional units included in the information processing device 10.

The sensor unit 110 has the function of detecting the surrounding situation of the user U1 from various perspectives. The sensor unit 110 includes, for example, an image obtaining device that obtains the surrounding situation in the form of images. Herein, the image obtaining device can be one of various known visualizing devices such as a camera. A sensor device includes, for example, at least one of various known sensors such as a distance sensor (for example, a Time of Flight sensor), a temperature sensor, or an acceleration sensor. Moreover, the sensor unit 110 can also include a receiver for receiving positioning signals from a positioning satellite such as the GPS (Global Positioning System) or the GLONASS (Global Navigation Satellite System).

The detection result obtained by the sensor unit 110 is communicated as sensor information to the communication unit 150, and is then sent to the server 20 via the network 30. The server 20 recognizes the received sensor information and sends the result of recognition as surrounding information, which represents the primary information regarding the surrounding situation of the user, to the information processing device 10 via the network 30. The surrounding information that is sent to the information processing device 10 is then communicated to the processing unit 130.

The memory unit 120 has the function of storing a variety of information. The function of the memory unit 120 is implemented using any one of various known types of recording devices such as a RAM (Random Access Memory) or a ROM (Read Only Memory).

The memory unit 120 is used to store, for example, user characteristic information that indicates the user characteristics of the user. More particularly, the user characteristic information contains information regarding the condition of the user or information regarding the belongings of the user. The user characteristic information stored in the memory unit 120 is referred to by the processing unit 130 as may be necessary. The user characteristic information is used by the processing unit 130 at the time of converting the surrounding information into relative information.

Meanwhile, the memory unit 120 can be installed outside the information processing device, such as in one of various types of servers in the cloud. In that case, the information stored in the memory unit 120 is sent to the communication unit 150 via the network 30, and is then communicated to the processing unit 130. Moreover, the memory unit 120 can be used to store the user characteristics of a single user, or can be used to store the user characteristics of a plurality of users. When the user characteristics of a plurality of users are stored in the memory unit 120, the user characteristics corresponding to the user of the information processing device 10 are referred to by the processing unit 130 as may be necessary.

Regarding the user characteristic information, the detailed explanation is given below. The user characteristic information represents a variety of information regarding the characteristics of the user. The user characteristic information contains condition information regarding the condition of the user. Herein, the condition information can contain physical information regarding the physical characteristics of the user, or can contain information regarding the mental condition of the user. The physical information can contain information about, for example, the height, the weight, the hand length (the length from the crease of the wrist to the tip of the middle finger), the body temperature, the length of stride, the seating height, and the age of the user. Moreover, the physical information can also contain information about peculiar circumstances of the user (for example, about the presence or absence of any defect such as a defect in color perception or constriction of the visual field).

Meanwhile, the user characteristics information can also contain belongings information regarding the belongings of the user. The belongings information represents information regarding various objects that are in possession of the user at his or her house, for example. Thus, the belongings information can be information regarding, for example, the sizes, the types, the colors, the materials, and the textures of eating utensils in possession of the user at his or her house.

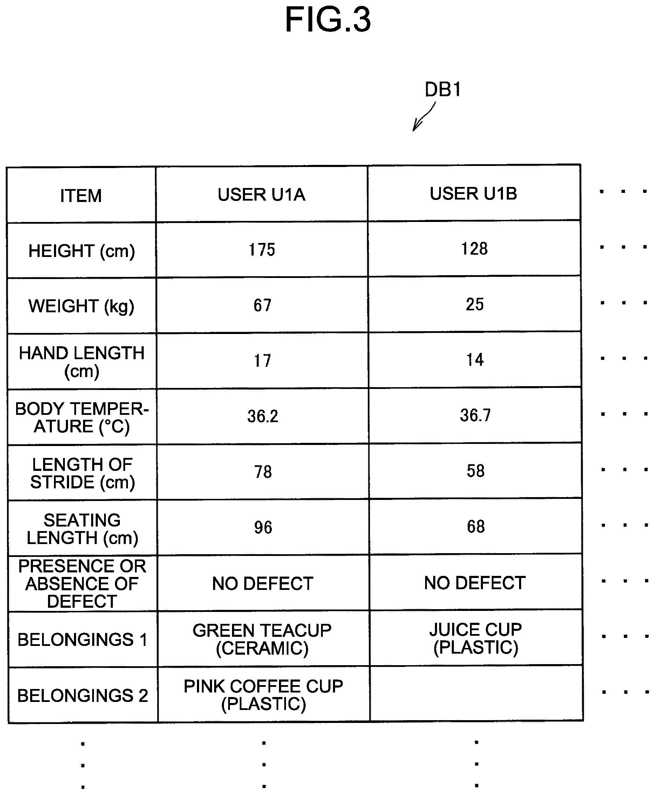

In the first embodiment, the information regarding such user characteristics is stored in the form of a user characteristic database DB1 in the memory unit 120. Explained below with reference to FIG. 3 is the user characteristic database DB1. FIG. 3 is a diagram illustrating an exemplary data configuration of the user characteristic database DB1. In the user characteristic database DB1, for example, the user characteristics of two users, namely, a user U1A and a user U1B are stored. Herein, for example, the user U1A is an adult, and the user U1B is a child. Moreover, in the user characteristic database DB1, user characteristics regarding users such as infants and elderly persons can also be recorded. With reference to FIG. 3, although the user characteristics of two users are stored, the user characteristic database DB1 can be used to store the user characteristics of only a single user or can be used to the user characteristics of three or more users. Moreover, the user characteristics can be stored in a table format as illustrated in FIG. 3, or can be stored in any other format.

As illustrated in FIG. 3, in the user characteristic database DB1, regarding the users U1A and U1B, following information is recorded as the physical information: the height, the weight, the hand length, the body temperature, the length of stride, and the presence or absence of a defect. Moreover, in the user characteristic database DB1, regarding the users U1A and U1B, information indicating the belongings in the respective houses is recorded as the belongings information. Moreover, in the parenthesis given below the belongings, the respective materials are written. As explained later in an example of the operations performed in the information processing system 1, based on such user characteristics, the processing unit 130 converts the surrounding information into relative information corresponding to the user characteristics. That enables the user U1 to easily recognize the surrounding information in a more easy-to-understand manner.

The processing unit 130 has the function of converting the surrounding information into relative information, which corresponds to the user characteristics, based on the user characteristics. Moreover, it is desirable that the processing unit 130 also has the function of selecting, from a plurality of detected objects as detected by the sensor unit 110, a notification object to be notified to the user, and making the output unit 140 output relative information regarding that notification object. These functions are implemented as a result of cooperation among a converting unit 131, a selecting unit 132, and an output control unit 133 included in the processing unit 130.

The converting unit 131 converts the surrounding information into relative information, which represents the secondary information corresponding to the user characteristics, based on the user characteristics. The relative information is then communicated to the selecting unit 132.

The surrounding information can contain information regarding situations evoked due to the objects detected by the sensor unit 110 (for example, regarding dangerous situations). Moreover, the surrounding information can contain object information that is information regarding the detected objects that are detected by the sensor unit 110. For example, the detected objects can be various objects such as articles of furniture, eating utensils, and persons present around the user and detected by the sensor unit 110.

The converting unit 131 can convert object information into relative information corresponding to the user characteristics. For example, assume that the object information indicates that "there is a plastic teacup". At that time, if the belongings information indicating that "there is a plastic teacup at the house" is included in the user characteristic information, then the converting unit 131 converts the object information into relative information indicating that "there is a teacup having the same texture as the teacup present at the house". Then, the relative information is output by the output unit 140, and is notified to the user U1. Hence, the user U1 becomes able to understand the object information in a more easily visualizable manner, and to more easily recognize the information regarding the detected object.

The converting unit 131 can convert the surrounding information into relative information corresponding to the physical information regarding the physical features of the user U1. For example, assume that the physical information contains "length of stride: 78 cm". Moreover, at that time, assume that position information included in the surrounding information indicates that "there is a cup ahead at the distance of 4 m" . In that case, since (4 m) ÷ (78 cm) = approximately 5 (strides), the converting unit 131 converts the position information into relative information indicating that "there is a cup ahead at the distance of five strides". In this way, the relative information represents the information corresponding to the physical information of the user. Hence, when the relative information is output from the output unit 140, the user U1 becomes able to recognize the position of the cup in a more easy-to-understand manner.

Returning to the explanation with reference to FIG. 2, the explanation is given about a configuration of the information processing device 10. When the sensor unit 110 has detected a plurality of detected objects, the selecting unit 132 selects, from among the detected objects, the notification object to be notified to the user U1. Then, the relative information regarding that detected object is communicated to the output control unit 133.

For example, from among a plurality of detected objects, the selecting unit 132 can select the detected object having the highest level of danger as the notification object. The level of danger posed by a detected object is sometimes estimated by, for example, the server 20. For example, from among a plurality of detected objects, the server 20 can estimate the detected object having the highest temperature as the detected object having the highest level of danger. Then, the relative information regarding the detected object that is selected by the selecting unit 132 is output to the output unit 140 via the output control unit 133. Hence, the user U1 becomes able to recognize, in a more easy-to-understand manner, the object information regarding the detected object having the highest level of danger.

The output control unit 133 has the function of making the output unit 140 output the relative information communicated from the selecting unit 132. For example, the output unit 140 outputs the relative information using an audio or an image. When the output unit 140 outputs the relative information using an audio, the output control unit 133 uses various known speech synthesis functions provided therein so as to convert the relative information expressed as, for example, character string data into audio information, and transmits the audio information to the output unit 140. As a result, the output unit 140 becomes able to output the relative information in the form of an audio. Alternatively, the output control unit 133 can communicate the relative information in the form of character string data to the output unit 140, and the output unit 140 can output characters.

Thus, the output unit 140 has the function of outputting a variety of information such as the relative information. The output unit 140 can be an audio output device such as a speaker that outputs various known sounds, or can be an image output device such as a monitor that outputs various known images. Since the output unit 140 outputs the relative information, the user U1 becomes able to recognize the relative information.

The communication unit 150 has the function of sending and receiving a variety of information. More particularly, the communication unit 150 sends information to and receives information from the server 20 via the network 30. For example, the communication unit 150 sends sensor information, which comes from the sensor unit 110, to the server 20. Moreover, the communication unit 150 receives the surrounding information from the server 20, and communicates it to the processing unit 130.

### (Server)

The server 20 has the function of receiving sensor information from the sensor unit 110 and, based on the received server information, generating surrounding information that represents the primary information regarding the surrounding situation of the user U1. The function of the server 20 is implemented as a result of cooperation between a recognizing unit 210 and a communication unit 220 included in the server 20.

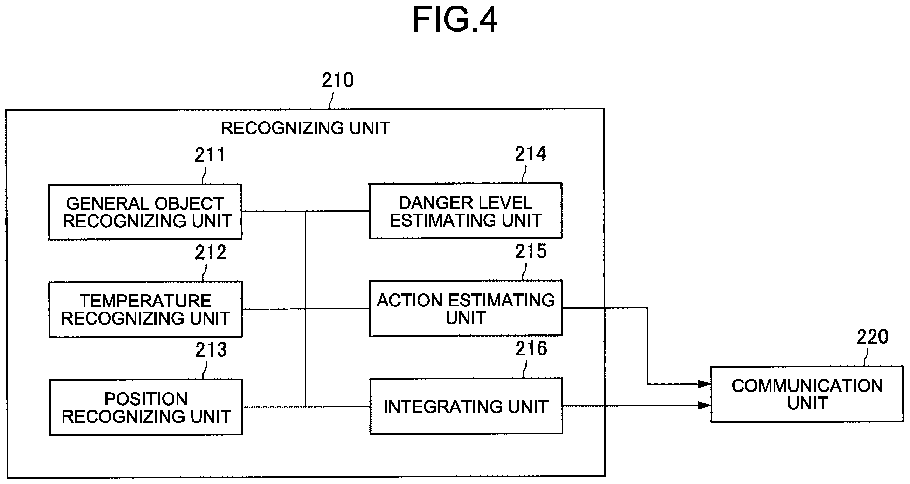

The recognizing unit 210 has the function of generating the surrounding information based on the sensor information received from the sensor unit 110. Explained below with reference to FIG. 4 is the detailed explanation of the recognizing unit 210. FIG. 4 is a block diagram illustrating a configuration of the recognizing unit 210 according to the first embodiment of the application concerned. As illustrated in FIG. 4, the recognizing unit 210 includes, for example, a general object recognizing unit 211, a temperature recognizing unit 212, a position recognizing unit 213, a danger level estimating unit 214, an action estimating unit 215, and an integrating unit 216.

The general object recognizing unit 211 has the function of implementing various known general object recognition technologies and recognizing the objects captured in the image information obtained by the sensor unit 110. For example, regarding each object captured in the image information, such as an article of furniture or an eating utensil; the general object recognizing unit 211 recognizes the size, the shape, the texture, the design, and the name of that object. Herein, each object recognized by the general object recognizing unit 211 can also be recognized as a detected object. The recognition result obtained by the general object recognizing unit 211 is communicated to the integrating unit 216. Moreover, the recognition result obtained by the general object recognizing unit 211 can be communicated also to the other functional units of the recognizing unit 210.

The temperature recognizing unit 212 has the function of recognizing the temperature based on the detection result obtained by the temperature sensor included in the sensor unit 110. For example, the temperature recognizing unit 212 can recognize the temperature of each detected object that is captured in the image information. The recognition result obtained by the temperature recognizing unit 212 is then communicated to the danger level estimating unit 214 and the integrating unit 216.

The position recognizing unit 213 has the function of recognizing, based on the detection result obtained by a ranging sensor included in the sensor unit 110 for distance detection, the position information of the detected objects with reference to the position of the user U1. For example, the position recognizing unit 213 can recognize, as the position information, the positional relationship between the user U1 and the objects captured in the image information. The recognition result obtained by the position recognizing unit 213 is communicated to the integrating unit 216.

The danger level estimating unit 214 has the function of estimating the level of danger posed by each detected object. For example, based on the recognition result obtained by the temperature recognizing unit 212, the danger level estimating unit 214 can estimate that, higher the temperature of a detected object, the higher is the level of danger posed by it. Moreover, the danger level estimating unit 214 can estimate the danger level according to the shape of the detected object. Thus, the danger level estimating unit 214 can estimate a sharp object such as a knife as a detected object having a high level of danger. Furthermore, the danger level estimating unit 214 can estimate, as a detected object having a high level of danger, a food item predicted to be in bad condition in view of the durable life or a pet predicted to be grumpy due to a fight captured in the image information. Then, the estimation result obtained by the danger level estimating unit 214 is communicated to the integrating unit 216.

The action estimating unit 215 has the function of estimating the actions of the user U1 who is wearing the information processing device 10. For example, the action estimating unit 215 estimates the actions of the user U1 based on the sensor information obtained from the sensors, such as an accelerator sensor, that are included in the sensor unit 110 for enabling detection of the actions of the user U1. For example, based on the sensor information obtained from the acceleration sensor, the action estimating unit 215 can estimate various actions of the user U1 such as the walking action and the stopping action. Moreover, based on the image information obtained by the image obtaining device included in the sensor unit 110, the action estimating unit 215 can estimate the gesture or the behavior of the user U1, such as the movement of the direction of eyes. Then, the estimation result obtained by the action estimating unit 215 is communicated to the communication unit 220.

The integrating unit 216 has the function of integrating the recognition result and the estimation result obtained by the functional units of the recognizing unit 210, and generating the integration result as surrounding information. For example, regarding a detected object recognized by the general object recognizing unit 211, the integrating unit 216 can generate object information by integrating the temperature recognized by the temperature recognizing unit 212, the positional relationship between the user U1 and the detected object, and the information regarding the level of danger posed by the detected object. Then, the integrating unit 216 can generate, as surrounding information, the information in which the object information of a plurality of detected objects is compiled. Subsequently, the surrounding information generated by the integrating unit 216 is communicated to the communication unit 220.

Till now, the explanation was given about the functional units of the recognizing unit 210. Returning to the explanation with reference to FIG. 2, the following explanation is given about the communication unit 220 of the server 20. The communication unit 220 has the function of sending and receiving a variety of information. For example, the communication unit 220 sends a variety of information to and receives a variety of information from the information processing device 10 via the network 30. More specifically, the communication unit 220 sends the surrounding information, which is generated by the recognizing unit 210, to the communication unit 150 of the information processing device 10 via the network 30. Moreover, the communication unit 220 receives the sensor information from the sensor unit 110.

### <<1.3. Example of operations>>

Given below is the specific explanation of an example of the operations performed in the information processing system 1 according to the first embodiment of the application concerned.

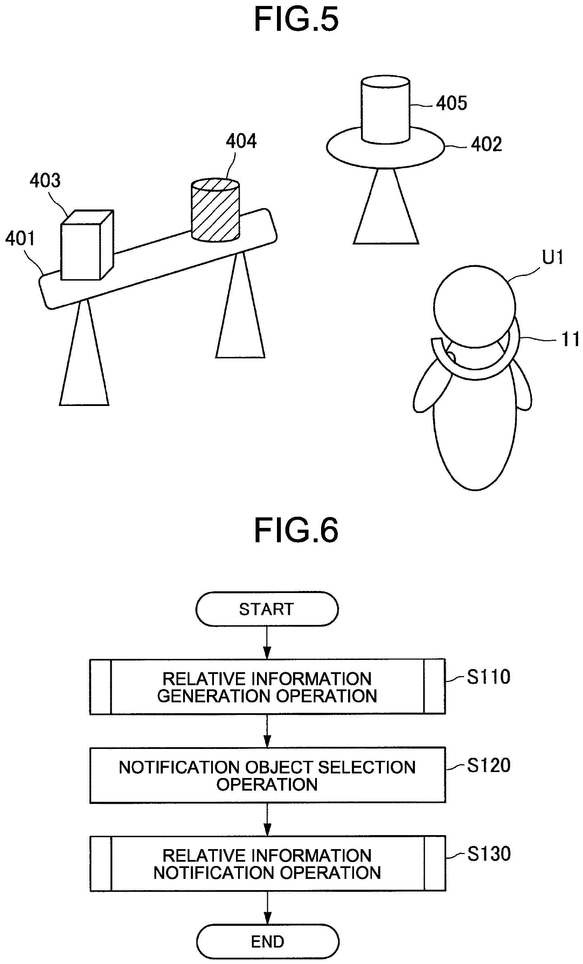

Firstly, explained below with reference to FIG. 5 is a situation according to the first embodiment. FIG. 5 is a diagram illustrating a situation according to the first embodiment. In the situation illustrated in FIG. 5, it is assumed that that the user U1 is facing toward the far left and is wearing the information processing device 10 around the neck. Moreover, in front of the user U1, a first table 401 having a substantially oblong platform is present, and a second table 402 having a substantially circular platform is present. On the first table 401, a first stationary article 403 having a cuboid shape is placed along with a first cup 404 having a cylindrical shape with oblique strokes. On the second table 402, a second cup 405 having a cylindrical shape is placed. The first table 401, the second table 402, the first stationary article 403, the first cup 404, and the second cup 405 are detected by the sensor unit 110 and are recognized as detected objects by the recognizing unit 210. In the following explanation, the first table 401, the second table 402, the first stationary article 403, the first cup 404, and the second cup 405 are also collectively referred to as surrounding objects.

Explained below with reference to flowcharts illustrated in FIGS. 6 to 8 is an example of the operations performed in the information processing system 1 according to the first embodiment of the application concerned. FIG. 6 is a flowchart for explaining an example of the operations performed in the information processing system 1 according to the first embodiment of the application concerned. Hereinafter, the example of operations is explained in accordance with the flowchart illustrated in FIG. 6.

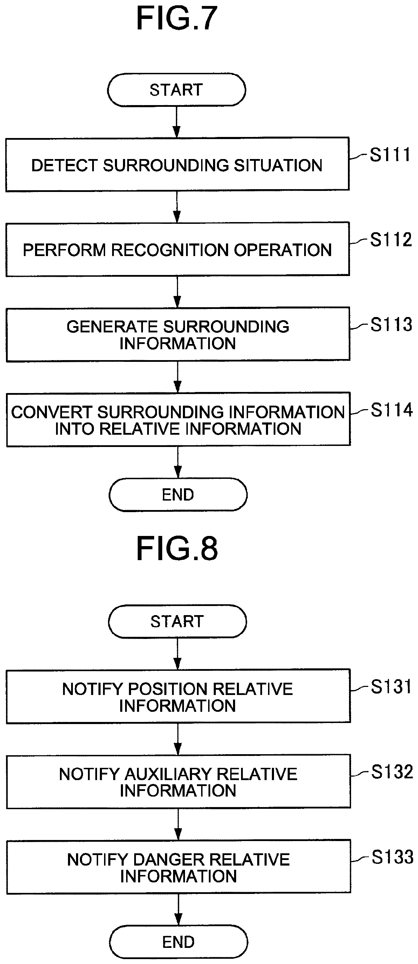

Firstly, a relative information generation operation is performed (Step S110). More particularly, at Step S110, the relative information generation operation is performed as illustrated in FIG. 7. FIG. 7 is a flowchart for explaining the relative information generation operation.

Firstly, the sensor unit 110 detects the surrounding situation of the user U1 (Step S111). More particularly, the devices included in the sensor unit 110, such as the image obtaining device, the temperature sensor, and the ranging sensor, detect the surrounding situation of the user U1. For example, the image obtaining device takes images of the surrounding objects present around the user U1 and obtains image information about the captured surrounding objects. The temperature sensor obtains temperature information indicating the temperature of each surrounding object and temperature of the ground or the wall corresponding to that surrounding object. The ranging sensor obtains distance information indicating the distance between the user U1 and each surrounding object. The sensor information obtained by such devices of the sensor unit 110 are communicated to the communication unit 150, sent to the server 20 via the network 30, and communicated to the recognizing unit 210 via the communication unit 220. In this way, the recognizing unit 210 obtains the sensor information from the sensor unit 110.

Then, the recognizing unit 210 performs a recognition operation (Step S112). For example, based on the image information, the general object recognizing unit 211 recognizes the size, the shape, the texture, and the object name of each surrounding object present around the user U1. Moreover, the general object recognizing unit 211 recognizes each surrounding object, which is captured in the image information, as a detected object.

Furthermore, based on the temperature information, the temperature recognizing unit 212 recognizes the surrounding temperature of the user U1. For example, the temperature recognizing unit 212 recognizes the temperature of each surrounding object. Moreover, based on the distance information, the position recognizing unit 213 recognizes the positional relationship between the user U1 and each surrounding object present around the user U1. For example, the position recognizing unit 213 recognizes the position of each surrounding object with reference to the position of the user U1.

The danger level estimating unit 214 estimates the level of danger posed by each surrounding object. Herein, the danger level estimating unit 214 can estimate the level of danger posed by each surrounding object based on the temperature of that surrounding object. In the first embodiment, assume that a hot drink is poured into the second cup 405. In that case, the second cup 405 poses a risk of a burn injury to the user U1. The temperature recognizing unit 212 recognizes that the second cup 405 has a high temperature. Hence, the danger level estimating unit 214 can estimate that the second cup 405 has a high level of danger. Furthermore, if the temperature recognizing unit 212 recognizes that the surrounding objects other than the second cup 405 are at around the room temperature, then the danger level estimating unit 214 can estimate that the surrounding objects other than the second cup 405 have a low level of danger. Thus, the danger level estimating unit 214 estimates that the second cup 405 has a high level of danger, and the other surrounding objects have a low level of danger.

The recognition result and the estimation result obtained by the general object recognizing unit 211, the temperature recognizing unit 212, the position recognizing unit 213, and the danger level estimating unit 214 is communicated to the integrating unit 216.

Subsequently, the integrating unit 216 generates surrounding information (Step S113). More particularly, the integrating unit 216 integrates the recognition result obtained by the general object recognizing unit 211, the temperature recognizing unit 212, the position recognizing unit 213, and the danger level estimating unit 214; and generates the integration result as surrounding information.

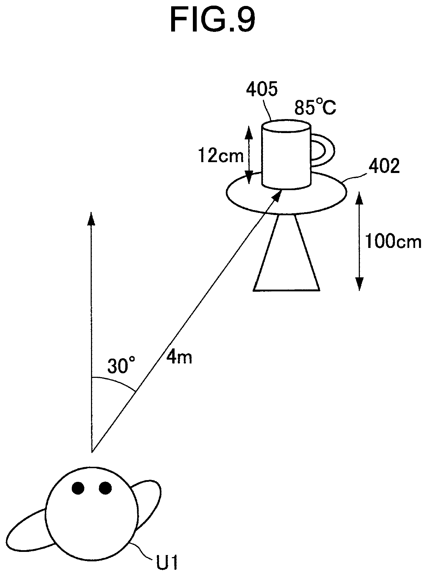

Explained below with reference to FIG. 9 is the object information about the second cup 405. FIG. 9 is a diagram for explaining the object information about the second cup 405 as generated by the integrating unit 216. In FIG. 9, the user U1 is illustrated along with the second cup 405 that is placed on the second table 402. The object information about the second cup 405 contains the information illustrated in FIG. 9. More particularly, the information about the second cup 405 contains information indicating that the second cup 405 having the height of 12 cm and the temperature of 85 °C is placed at a position that, with reference to the position of the user U1, is at the distance of 4 m in the direction inclined by 30° to the right side from the frontal direction of the user U1 and is at the height of 100 cm. The integrating unit 216 generates such object information for each surrounding object, and generates surrounding information by compiling the sets of object information.

The surrounding information generated by the integrating unit 216 is communicated to the communication unit 220. Then, the surrounding information, which has been communicated to the communication unit 220, is sent to the communication unit 150 in the information processing device 10 and is communicated to the converting unit 131 of the processing unit 130.

Subsequently, based on the user characteristics of the user U1, the converting unit 131 converts the surrounding information to relative information corresponding to the user characteristics (Step S114). The user characteristics of the user U1 are stored in the memory unit 120. Thus, the converting unit 131 obtains the user characteristic information, which indicates the user characteristics, from the memory unit 120. Herein, it is assumed that the user U1 has identical user characteristics to the user characteristics of the user U1A specified in the user characteristic database DB1. Thus, the physical information about the physical features of the user U1 indicates that the height is 175 cm, the weight is 67 kg, the hand length is 17 cm, the body temperature is 36.2 °C, the length of stride is 78 cm, and the seating height is 96 cm. Moreover, the belongings information about the belongings of the user U1 indicates that the user U1 has a green ceramic teacup and a pink plastic coffee cup at the house. Based on such user characteristic information, the converting unit 131 converts the surrounding information into relative information.

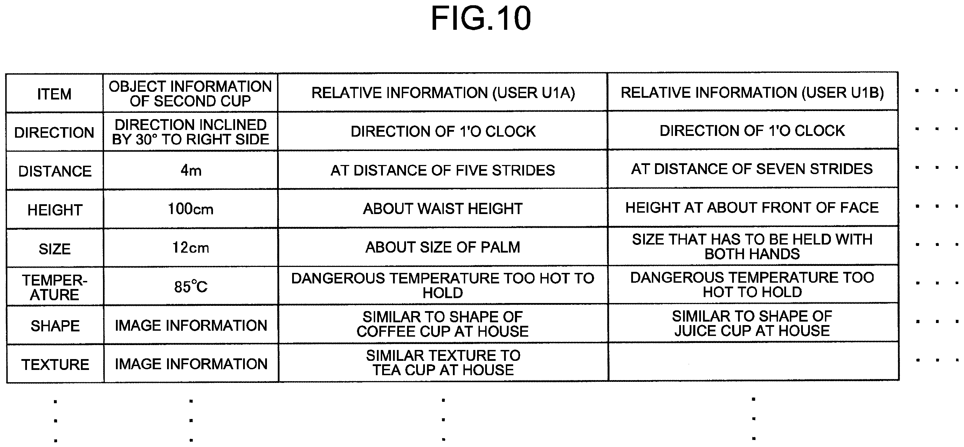

Explained with reference to FIG. 10 is the relative information generated by the converting unit 131. FIG. 10 is a diagram illustrating the object information about the second cup 405 and illustrating the relative information generated by the converting unit 131. In FIG. 10 is illustrated the object information about the second cup 405, the relative information corresponding to the user characteristics of the user U1A, and the relative information corresponding to the user U1B. Herein, the explanation is given about the example in which the converting unit 131 converts the object information about the second cup 405 into relative information corresponding to the user characteristics of the user U1A.

Regarding the items such as the direction, the distance, the height, the size, the temperature, the shape, and the texture that are included in the object information about the second cup 405; the converting unit 131 converts the information into the following: "direction of 1'o clock", "at the distance of five strides", "about the waist height", "about the size of a palm", "dangerous temperature too too hot to hold", "similar to the shape of the coffee cup at the house", and "similar texture to the tea cup at the house", respectively. Based on such converted information, the converting unit 131 converts the object information about the second cup 405 into, for example, relative information indicating that "the second cup 405 is placed at about the waist height in the direction of 1'o clock at the distance of five strides". As a result, the set of objective events included in the surrounding information gets converted into relative information that is easily visualizable to the user, with reference to the physical features of the user and with reference to the things that are easily evoked by the user. For that reason, the user U1 can more easily understand the objective facts included in the surrounding information. Meanwhile, herein, although the object information regarding the direction, the distance, and the height is converted into relative information, it is alternatively possible to convert any arbitrary items included in the target information into relative information. Moreover, the converting unit 131 can convert all of the object information into relative information, or can convert only some of the object information into relative information as explained above.

Moreover, the converting unit 131 can convert the surrounding information in a segmented manner into a plurality of sets of relative information. For example, the converting unit 131 can convert the object information about the second cup 405 in a segmented manner into three sets of relative information, namely, position relative information, auxiliary relative information, and danger relative information. Herein, the position relative information is about the positional relationship between the user U1 and the second cup 405. For example, the position relative information can indicate that "the second cup 405 is placed at about the waist height in the direction of 1'o clock at the distance of five strides". The auxiliary relative information indicates the auxiliary information about the second cup 405 such as the size and the texture thereof. For example, the auxiliary relative information can indicate that "the second cup 405 is about the size of a palm and is similar to a cup at the house". The danger relative information alerts the user U1 about the dangers. For example, the danger relative information can indicate to "pay attention as the second cup 405 has become too hot to hold" or to "be careful as there is a table nearby".

The converting unit 131 can also convert the object information about each other detected object, other than the second cup 405, included in the surrounding information into relative information. The relative information about each detected object as generated by the converting unit 131 is then communicated to the selecting unit 132.

It marks the end of the relative information generation operation illustrated in FIG. 7. That is, it marks the end of the operation performed at Step S110 illustrated in the flowchart in FIG. 6.

After the relative information generation operation is performed, a notification object selection operation is performed (Step S120). More particularly, the selecting unit 132 selects, from a plurality of detected objects, the notification object that is to be notified to the user U1. For example, the selecting unit 132 can select the notification object according the level of danger posed by each of a plurality of detected objects. In the first embodiment, since the temperature of the second cup 405 is high, it is estimated that the second cup 405 has a high level of danger. On the other hand, the other detected objects other than the second cup 405 are at the room temperature and are thus estimated to have a lower level of danger than the level of danger posed by the second cup 405. In that case, the selecting unit 132 selects the second cup 405 as the notification object. The relative information regarding the selected second cup 405 is then communicated to the output control unit 133.

Subsequently, a relative information notification operation is performed (Step S130). More particularly, the operation illustrated in FIG. 8 is performed. As explained earlier, the converting unit 131 converts the surrounding information in a segmented manner into three sets of relative information. In the relative information notification operation performed at Step S130, the output control unit 133 controls the output unit 140 to ensure that the three sets of relative information are output in a stepwise manner. FIG. 8 is a flowchart for explaining the relative information notification operation. Thus, the relative information notification operation is explained below with reference to the flowchart illustrated in FIG. 8.

Firstly, the output control unit 133 makes the output unit 140 output the position relative information (Step S131). With that, the position relative information is notified to the user U1. More particularly, the output control unit 133 makes the output unit 140 output the position relative information in the form of an audio.

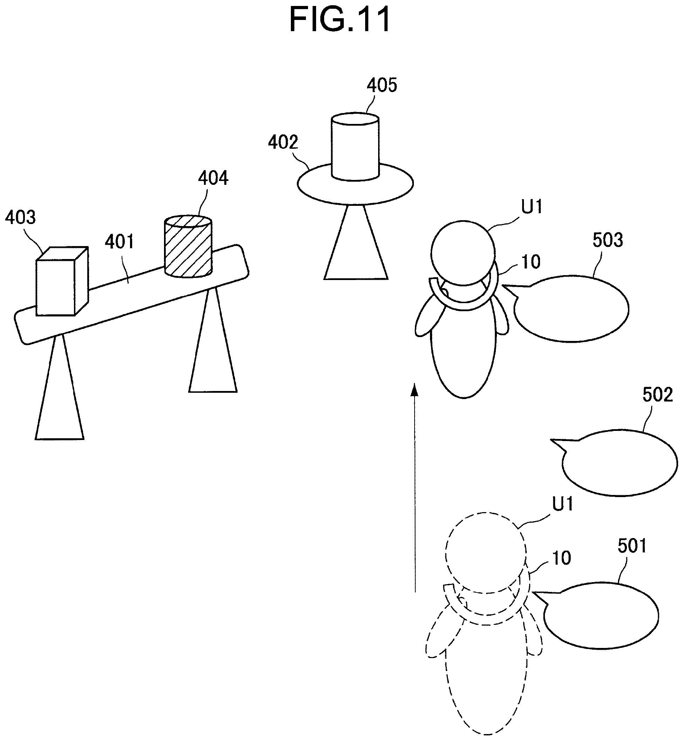

Explained below with reference to FIG. 11 is a situation in which the output unit 140 outputs the position relative information. FIG. 11 is diagram illustrating the situation in which the output unit 140 outputs the relative information. At the time of being notified of the position relative information, the user U1 is present at the position illustrated using dashed lines. The output unit 140 included in the information processing device 10 outputs the position relative information about the second cup 405 representing the notification object. More particularly, the output unit 140 outputs an audio 501 saying "the second cup 405 is placed at about the waist height in the direction of 1'o clock at the distance of five strides". With that, it becomes possible for the user U1 to easily recognize the position of the second cup 405.

Moreover, at that time, the output control unit 133 can make the output unit 140 also output information regarding the other detected objects other than the second cup 405. For example, the output control unit 133 can make the output unit 140 output an audio saying "besides, the first cup 404 is placed at about the waist height in the direction of 12'o clock at the distance of three strides" or an audio saying "besides, the first stationary article 403 is placed at about the chest height in the direction of 11'o clock at the distance of one stride".

Then, the output control unit 133 makes the output unit 140 output the auxiliary relative information (Step S132). With that, the auxiliary relative information is notified to the user U1. Meanwhile, in the first embodiment, the output control unit 133 controls the output unit 140 to ensure that the three sets of relative information are output in a stepwise manner based on the actions of the user U1. More particularly, the output control unit 133 outputs the output unit 140 output the auxiliary relative information when the user U1 has performed a predetermined action. Herein, when the user U1 starts walking toward the second cup 405 (in the direction of an arrow illustrated in FIG. 11), the output control unit 133 makes the output unit 140 output the auxiliary relative information. The fact that the user U1 has started walking is estimated by the action estimating unit 215 of the server 20 based on the sensor information regarding the action of the user U1, such as the information detected by the acceleration sensor of the information processing device 10. Then, the estimation result obtained by the action estimating unit 215 is communicated to the output control unit 133 via the network 30 and the communication unit 150. In response, the output control unit 133 makes the output unit 140 output the auxiliary relative information. More particularly, while the user U1 is walking in the direction of the arrow, the output unit 140 outputs an audio 502 saying "the cup is about the size of the palm and is similar to the cup you possess". With that, the user U1 becomes able to easily visualize the information such as the size and the texture of the second cup 405.

Subsequently, the output control unit 133 makes the output unit 140 output the danger relative information (Step S133). With that, the danger relative information is notified to the user U1. More particularly, the output unit 140 outputs an audio 503 saying "pay attention as the second cup 405 has become too hot to hold, and be careful as there is a table nearby". Hence, the user U1 becomes able to recognize, in an easy-to-understand manner, the danger posed by the second cup 405. As a result, the user U1 can gently hold the second cup 405 in a careful manner. Moreover, the situation in which the user U1 casually touches the second cup 405 and gets a burn injury is prevented from occurring.

Once the output unit 140 outputs the danger relative information, it marks the end of the operations illustrated in FIG. 8. Thus, returning to FIG. 6, the operation at Step S130 ends, and it marks the end of the operations illustrated in FIG. 6. Till now, the explanation was given about an example of the operations performed in the information processing system 1 according to the first embodiment.

Herein, the explanation has been given with reference to the adult user U1A. Alternatively, in the case of the child user U1B, the converting unit 131 converts the surrounding information into relative information corresponding to the user U1B. More particularly, the converting unit 131 converts the object information about the second cup 405 into relative information for the user U1B as illustrated in FIG. 10. In that case too, the converting unit 131 can convert the object information in in a segmented manner into three sets of relative information, namely, position relative information, auxiliary relative information, and danger relative information. For example, the converting unit 131 can generate position relative information in which "the second cup 405 is placed at about front of the face in the direction of 1'o clock at the distance of seven strides" represents the object information regarding the distance and the height of the second cup 405. Moreover, the converting unit 131 generates auxiliary relative information in which "the second cup 405 is large and has to be held in both hands and is similar to a juice cup at the house" represents the object information regarding the size and the shape of the second cup 405. Furthermore, the converting unit 131 can convert the danger relative information regarding the dangers posed by the second cup 405 into danger relative information indicating "You have to be careful as the second cup 405 has become too hot to hold. Also, there is a table nearby. So please be careful and do not rush". Since the user U1B is a child, the converting unit 131 converts into such danger relative information which has a child-friendly tone. As explained earlier with reference to FIG. 11, the position relative information, the auxiliary relative information, and the danger relative information can be output in a stepwise manner by the output unit 140.

### <<1.4. Effect>>

In the first embodiment, the converting unit 131 converts the surrounding information, which is generated based on the sensor information coming from the sensor unit 110, into relative information corresponding to the user characteristics of the user U1 based on those user characteristics. Then, the relative information is output from the output unit 140 to the user U1. Since the post-conversion relative information is presented to the user U1 in an easy-to-understand form, it becomes easier for the user U1 to visualize the surrounding information. That enables the user U1 to recognize the surrounding information with more ease.

Moreover, in the first embodiment, the output control unit 133 controls the output unit 140 to ensure that the relative information is output according to the transition of the past output of the relative information from the output unit 140. For example, the output control unit 133 makes the output unit 140 output the position relative information, the auxiliary relative information, and the danger relative information in that order. Hence, the user becomes able to understand the relative information in accordance with the transition of the past output. That enables the user U1 to recognize the surrounding information with more ease.

Furthermore, the converting unit 131 converts the surrounding information into position relative information regarding the distance between the user U1 and the second cup 405, and into auxiliary relative information and danger relative information regarding the condition of the second cup 405. Then, the output control unit 133 makes the output unit 140 output the position relative information (Step S131), and then output the auxiliary relative information and the danger relative information (Steps S132 and S133). In the surrounding information, sometimes the position information of the detected object carries high significance. That is because, when the position information of the detected object is known, the user U1 either can approach the detected object or can avoid the detected object in such a way that it becomes easier to take action with respect to the detected object. For that reason, it becomes possible to prevent a situation in which the user U1 carelessly collides with or touches the detected object. Thus, the user U1 becomes able to recognize the surrounding information with more safety.

The selecting unit 132 selects, from among a plurality of detected objects, the second cup 405, which is the detected object having the highest level of danger, as the notification object. The output control unit 133 makes the output unit 140 output the relative information about the second cup 405. Hence, the user U1 becomes able to recognize, with more ease, the detected objects having a high level of danger that are present around.

Furthermore, the converting unit 131 converts the surrounding information into danger relative information representing the information about the dangers present around the user U1. More particularly, the converting unit 131 converts the object information about the second cup 405 into danger relative information indicating to "pay attention as the second cup 405 has become too hot to hold" or to "be careful as there is a table nearby". When that danger relative information is output, the user U1 becomes able to recognize the danger posed by the second cup 405, which is a detected object, in a more easy-to-understand manner.

### <Second embodiment>

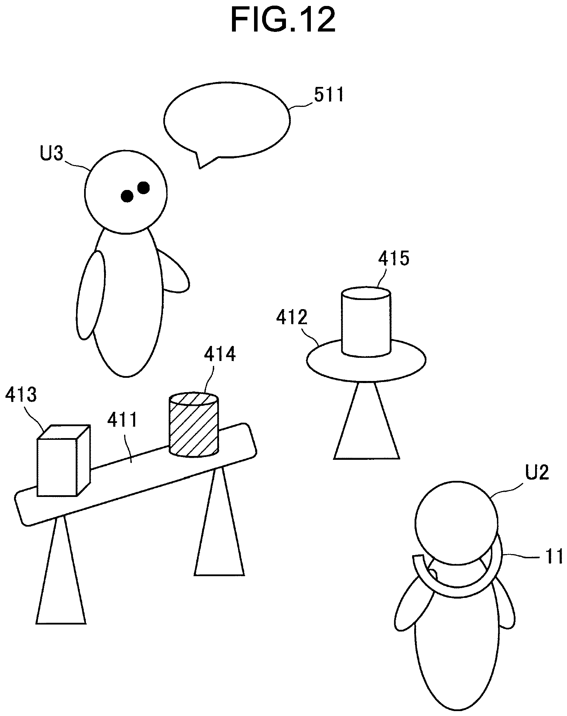

Given below is the explanation of a second embodiment according to the application concerned. The following explanation is focused on the differences with the first embodiment, and identical points to the first embodiment are not explained again. Firstly, explained below with reference to FIG. 12 are the differences between the situation according to the first embodiment and the situation according to the second embodiment. FIG. 12 is a diagram for explaining the situation according to the second embodiment.

With reference to FIG. 12, a user U2 wearing an information processing device 11 is illustrated along with a third table 411 and a fourth table 412. Moreover, on the third table 411, a second stationary article 413 is placed along with a third cup 414 with oblique strokes. On the fourth table 412, a fourth cup 415 is placed. As compared to the situation according to the first embodiment, the situation according to the second embodiment differs in the way that a user U3 is also present who is different than the user U2 wearing the information processing device 11. Herein, the user U3 utters a voice 511 saying "take this along" to the user U2. At that time, if the user U2 is not looking at the user U3, then it may not be possible to understand whether the reference term "this" included in the voice 511 points to the second stationary article 413, or the third cup 414, or the fourth cup 415. In such a case too, as a result of the operations performed in an information processing system 2 according to the second embodiment of the application concerned, the user becomes able to recognize, in an easy-to-understand manner, what the term "this" points to.

### <<2.1. Configuration of information processing device and server>>

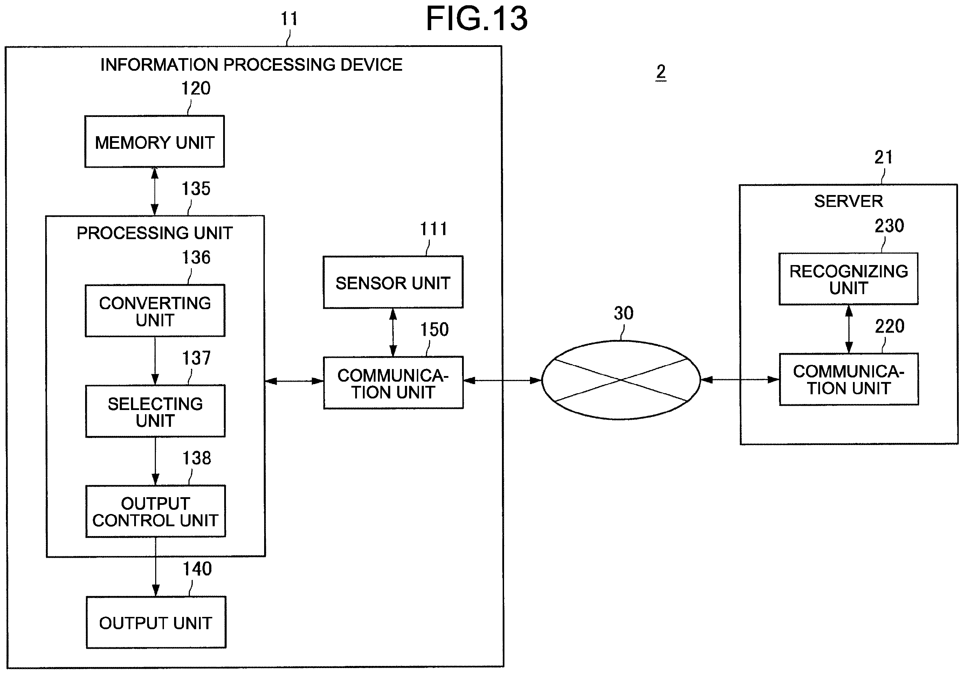

Explained below with reference to FIG. 13 is a configuration of the information processing system 2 according to the second embodiment of the application concerned. FIG. 13 is a block diagram illustrating a configuration of the information processing system 2 according to the second embodiment of the application concerned.

As compared to the information processing device 10 according to the first embodiment, the information processing device 11 according to the second embodiment differs in the way of the functions of a sensor unit 111 and a processing unit 135 included in the information processing device 11 and the function of a recognizing unit 230 included in a server 21. Given below is the explanation of each functional unit. Meanwhile, in an identical manner to the memory unit 120 according to the first embodiment, the memory unit 120 is used to store user characteristics identical to the user characteristics specified in the user characteristic database DB1 illustrated in FIG. 3.

Firstly, in an identical manner to the sensor unit 110 according to the first embodiment, the sensor unit 111 includes an image obtaining device and a sensor device such as a temperature sensor or a ranging sensor. In addition to including such devices as included in the sensor unit 110 according to the first embodiment, the sensor unit 111 also includes a sound obtaining device. The sound obtaining device obtains various sound waves such as the sounds generated from various objects and the voices uttered by persons. For example, the sound obtaining device is configured with a microphone. The sound obtaining device obtains, for example, the voice 511 of the user U3. The information regarding the sounds obtained by the sound obtaining device is then communicated as sound information to the communication unit 150. Subsequently, the sound information communicated to the communication unit 150 is sent to the communication unit 220 of the server 21 via the network 30, and is communicated to the recognizing unit 230.

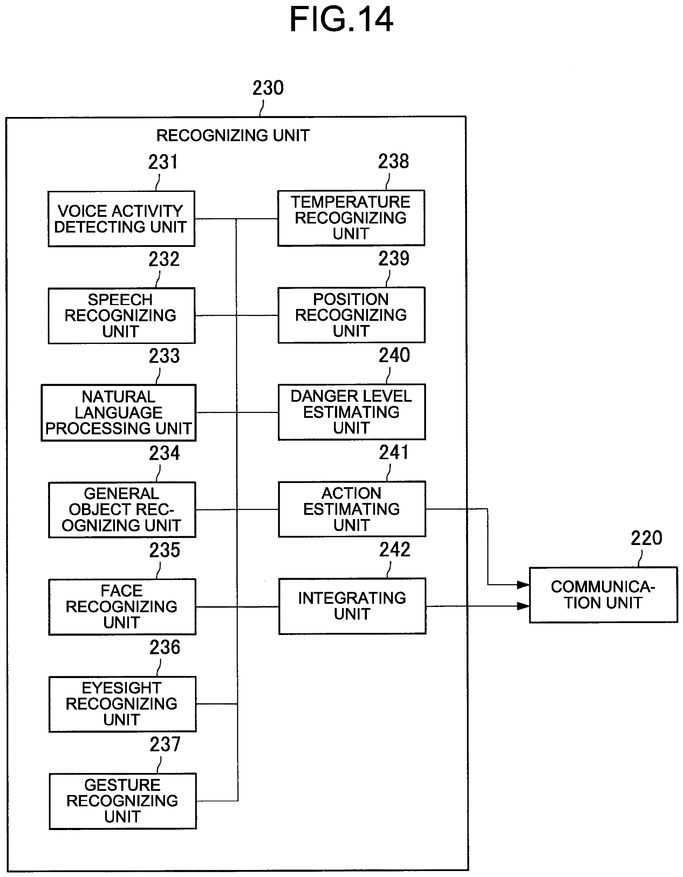

Explained below with reference to FIG. 14 is the recognizing unit 230 of the server 21. FIG. 14 is a block diagram illustrating a configuration of the recognizing unit 230 according to the second embodiment. As illustrated in FIG. 14, in an identical manner to the recognizing unit 210 according to the first embodiment, the recognizing unit 230 according to the second embodiment includes a general object recognizing unit 234, a temperature recognizing unit 238, a position recognizing unit 239, and an action estimating unit 241. These functional units have practically equivalent functions to the functions of the corresponding functional units of the recognizing unit 210 according to first embodiment. Hence, that explanation is not given again. Instead, the following explanation is given about a voice activity detecting unit 231, a speech recognizing unit 232, a natural language processing unit 233, a face recognizing unit 235, an eyesight recognizing unit 236, a gesture recognizing unit 237, and an integrating unit 242.

The voice activity detecting unit 231 implements various known voice activity detection (VAD) technologies and detects voice activity representing sections in which a voice is included in the sound information obtained by the sensor unit 111. For example, the voice activity detecting unit 231 detects, as voice activity, the section in which the voice 511 saying "take this along" included in the sound information is uttered by the user U3. When the voice activity detecting unit 231 detects the voice activity, the sound information regarding the voice activity is communicated to the speech recognizing unit 232.

The speech recognizing unit 232 implements various known speech recognition (automatic speech recognition) technologies and performs speech recognition with respect to the sound information regarding the voice activity that is detected to be a voice by the voice activity detecting unit 231. For example, the speech recognizing unit 232 outputs the result of speech recognition as character information in the form of character string data. For example, the speech recognizing unit 232 converts the information about the voice 511 saying "take this along" as uttered by the user U3 into character information. Then, the character information generated by the speech recognizing unit 232 is communicated to the natural language processing unit 233.

The natural language processing unit 233 implements various known natural language processing technologies and processes the natural language included in the character information that is generated by the speech recognizing unit 232. More particularly, the natural language processing unit 233 can perform morphological analysis, syntax parsing, context analysis, and semantic analysis with respect to the character information. For example, the natural language processing unit 233 can perform morphological analysis of the character information and determine whether or not a reference term such as "that over there" or "this" is included in the character information. For example, in the character information "take this along" corresponding to the voice 511 of the user U3, the reference term "this" is included. For that reason, the natural language processing unit 233 determines that a reference term is included in the character information regarding the voice 511 of the user U3. Then, the result of processing performed by the natural language processing unit 233 is communicated to the integrating unit 242.

The face recognizing unit 235 implements various known face recognition technologies and accordingly recognizes the faces of the persons captured in the image information that is obtained by an image obtaining device included in the sensor unit 111. For example, the face recognizing unit 235 recognizes the face of the user U3 captured in the image information. The recognition result obtained by the face recognizing unit 235 is then communicated to the eyesight recognizing unit 236 and the integrating unit 242.

The eyesight recognizing unit 236 recognizes the eyesight of a person based on the recognition result obtained by the face recognizing unit 235. For example, the eyesight recognizing unit 236 recognizes the eyesight of the user U3 who has been recognized by the face recognizing unit 235. As a result, what the user U3 is looking at is recognized. In the second embodiment, it is recognized that the user U3 is looking at the second cup 405. The recognition result obtained by the eyesight recognizing unit 236 is then communicated to the integrating unit 242.

The gesture recognizing unit 237 recognizes the gesture captured in the image information that is obtained by the image obtaining device included in the sensor unit 111. A specific example is explained below with reference to FIG. 12. It is assumed that the user U3 illustrated in FIG. 12 is pointing in the direction of the fourth cup 415. Based on the image information, the gesture recognizing unit 237 recognizes the gesture of pointing a finger as performed by the user U3. The recognition result obtained by the gesture recognizing unit 237 is then communicated to the integrating unit 242.

The integrating unit 242 integrates the recognition result and the estimation result obtained by the natural language processing unit 233, the general object recognizing unit 234, the face recognizing unit 235, the eyesight recognizing unit 236, the gesture recognizing unit 237, the temperature recognizing unit 238, the position recognizing unit 239, and a danger level estimating unit 240. Herein, the positional relationship between the user U1 and the second cup 405 according to the first embodiment is identical to the positional relationship between the user U2 and the fourth cup 415 according to the second embodiment. Moreover, the second cup 405 according to the first embodiment is practically identical to the fourth cup 415 according to the second embodiment. For that reason, the integrating unit 242 generates first-type information regarding the fourth cup 415 that is practically identical to the object information about the second cup 405 as explained earlier with reference to FIG. 9. In the second embodiment, the integrating unit 242 integrates, in addition to the first-type information, the recognition result obtained by the natural language processing unit 233, the face recognizing unit 235, the eyesight recognizing unit 236, and the gesture recognizing unit 237. As explained earlier, it is recognized that the eyesight of the user U3 is directed toward the fourth cup 415 and that the user U3 has uttered the voice 511 saying "take this along". Hence, the integrating unit 242 generates second-type information indicating that the reference term "this" points to the fourth cup 415. Then, the integrating unit 242 integrates the first-type information and the second-type information, and generates object information about the fourth cup 415. Then, the object information is communicated to the communication unit 220, and is sent to the communication unit 220 in the information processing device 11 and is communicated to a selecting unit 137.

Returning to the explanation with reference to FIG. 13, the following explanation is given about the processing unit 135 included in the information processing device 11 according to the second embodiment. In the processing unit 135 according to the second embodiment, the operations performed by the selecting unit 137 are different than the operations performed by the selecting unit 132 of the processing unit 130 according to the first embodiment. More particularly, the selecting unit 137 selects the notification object based on the information regarding the reference term included in the surrounding information. In the second embodiment, the surrounding information contains information indicating that the reference term "this" in the voice 511 uttered by the user U3 points to the fourth cup 415. Hence, the selecting unit 137 selects the fourth cup 415 as the notification object. Moreover, the selecting unit 137 obtains the relative information about the fourth cup 415 from a converting unit 136, and communicates that relative information to an output control unit 138. Then, the relative information is communicated to the output unit 140 and is output as an audio from the output unit 140. For example, the output unit 140 outputs an audio saying "the fourth cup 415 is placed at about the waist height in the direction of 1'o clock at the distance of five strides". With that, even if the user U2 was not looking at the user U3 when the user U3 had uttered "take this along"; the user U2 becomes able to recognize, in an easy-to-understand manner, that the term "this" indicates the fourth cup 415.

Moreover, in the second embodiment, the converting unit 136 converts the surrounding information into relative information, with an action of the user U3 serving as the trigger. There are times when an action of the user U3 is intended to inform the user U2 about the surrounding information. Hence, with the action of the user U3 serving as the trigger, the converting unit 136 converts the surrounding information into relative information, so as to make it easier for the user U2 to recognize the surrounding information about which the user U3 is trying to inform the user U2. More particularly, as explained below in an example of the operations, with an utterance of the user U3 serving as the trigger, the converting unit 136 converts the surrounding information into relative information.

### <<2.2. Example of operations>>

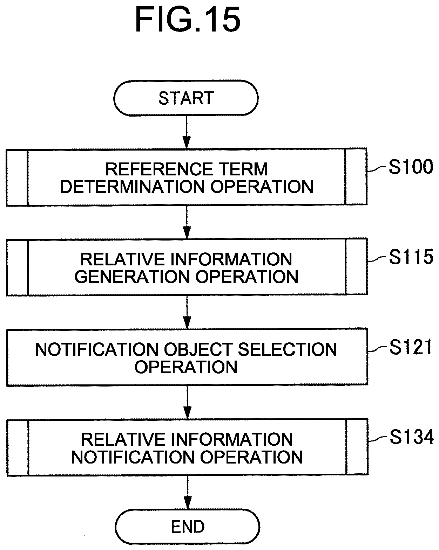

Regarding an example of the operations performed in the information processing system 2 according to the second embodiment, the detailed explanation is given below with reference to FIG. 15. FIG. 15 is a flowchart for explaining the operations performed in the information processing system 2 according to the second embodiment. Hereinafter, the operations performed in the information processing system 2 are explained in accordance with the flowchart illustrated in FIG. 15.

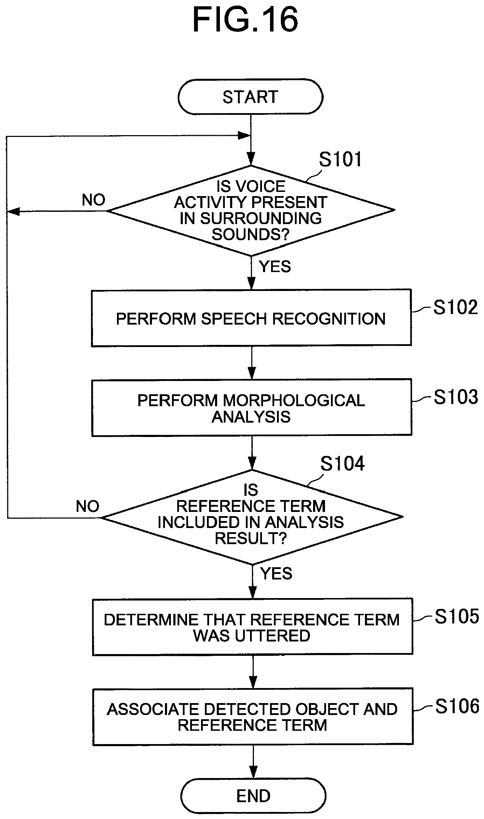

Firstly, a determination operation is performed for determining the utterance of a reference term (Step S100). More particularly, the operations illustrated in FIG. 16 is performed. FIG. 16 is a flowchart for explaining the determination operation for determining the utterance of a reference term. Hereinafter, the determination operation for determining the utterance of a reference term is explained in accordance with the flowchart illustrated in FIG. 16.

Firstly, the voice activity detecting unit 231 determines whether or not there is voice activity in the sounds generated around the user U2 (Step S101). If it is determined that there is voice activity (Yes at Step S101), then the system control proceeds to Step S102. However, if it is determined that there is no voice activity (No at Step S101), then the system control returns to Step S101 and the operation is repeated. Herein, the voice activity detecting unit 231 recognizes, as voice activity, the voice 511 by the user U3 saying "take this along", and determines that there is voice activity.

Then, the speech recognizing unit 232 performs speech recognition regarding the voice 511 included in the voice activity that was recognized at Step S101 (Step S102). More particularly, the speech recognizing unit 232 converts the voice 511 into character information indicating "take this along", and communicates that character information to the natural language processing unit 233.

Subsequently, the natural language processing unit 233 performs morphological analysis of the result of speech recognition as communicated from the speech recognizing unit 232 (Step S103). More particularly, the natural language processing unit 233 divides the character information indicating "take this along" into the smallest units of the language. For example, the natural language processing unit 233 converts the character information indicating "take this along" into "take•this•along".

Then, the natural language processing unit 233 determines whether or not a reference term is included in the analysis result obtained at Step S103 (Step S104). If it is determined that a reference term is included (Yes at Step S104), then the system control proceeds to Step S105. On the other hand, if it is determined that a reference term is not included (No at Step S104), then the system control returns to Step S101. Herein, the character information regarding the voice 511 of the user U3 contains a reference term "this". Hence, the natural language processing unit 233 determines that a reference term is included in the analysis result obtained at Step S103.

At Step S104, when it is determined that a reference term is included in the analysis result obtained at Step S103, the natural language processing unit 233 determines that a reference term was uttered (Step S105). The determination result is then communicated to the integrating unit 242.

Subsequently, the integrating unit 242 associates the detected object and the reference term (Step S106). More particularly, based on the eyesight of the user U3 or a gesture of the user U3 or based on the reference term (for example, "that over there" or "this"), the integrating unit 242 recognizes the detected object to which the reference term is pointing, and associates the detected object pointed by the reference term with the reference term. Herein, based on the eyesight of the user U3, the integrating unit 242 associates the reference term "this", which is included in the voice 511 of the user U3, with the fourth cup 415 representing the detected object.

Once the operation at Step S106 ends, it marks the end of the operations illustrated in FIG. 16. Subsequently, returning to FIG. 15, the operation at Step S100 ends.

Then, a relative information generation operation is performed (Step S115). Regarding the relative information generation operation, the following explanation is given with reference to the flowchart illustrated in FIG. 7. Herein, the operations performed at Steps S111 and S112 are practically identical to the operations performed at Steps S111 and S112 according to the first embodiment. Hence, that explanation is not given again.

When the operation at Step S112 ends, the integrating unit 242 generates surrounding information (Step S113). More particularly, the integrating unit 242 integrates the first-type information and the second-type information explained earlier, and generates object information regarding the fourth cup 415. In addition to generating object information regarding the fourth cup 415, the integrating unit 242 generates object information regarding the third table 411, the fourth table 412, the second stationary article 413, and the third cup 414. Then, the integrating unit integrates such sets of object information and generates surrounding information. The generated surrounding information is then communicated to the communication unit 220, and is sent to the communication unit 150 in the information processing device 11 via the network 30. Then, the surrounding information is communicated to the converting unit 136 of the processing unit 135.

Subsequently, the converting unit 136 converts the surrounding information into relative information corresponding to the user characteristics (Step S114). The operation performed at Step S114 according to the second embodiment is practically identical to the operation performed at Step S114 according to the first embodiment. Hence, that explanation is not given again. Till now, the explanation was given about the relative information generation operation (Step S110) according to the second embodiment.

When the operation at Step S110 ends, the system control returns to the flowchart illustrated in FIG. 15 and the selecting unit 137 performs a notification object selection operation (Step S121). In the second embodiment, the selecting unit 137 selects, as the notification object from among a plurality of detected objects, the detected object targeted by the reference term. Herein, the selecting unit 137 obtains the information indicating that the reference term "this" included in the voice 511 of the user U3 points to the fourth cup 415. Hence, the selecting unit 137 selects the fourth cup 415 as the notification object.

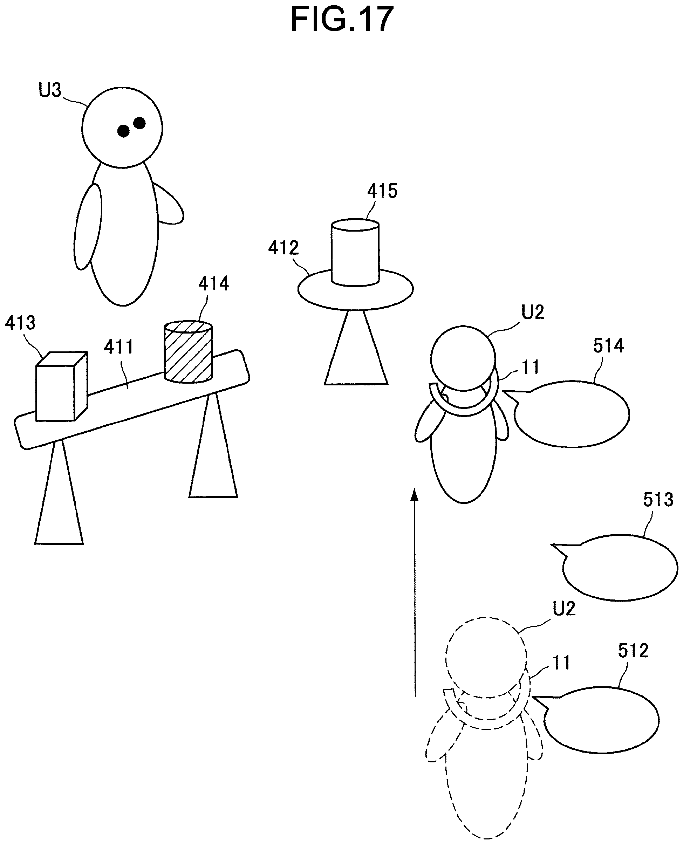

Then, a relative information notification operation is performed (Step S134). More particularly, in an identical manner to the first embodiment, the operations illustrated in the flowchart in FIG. 8 are performed. Explained below with reference to FIG. 17 is the relative information notification operation performed in the information processing device 11 according to the second embodiment. FIG. 17 is a diagram illustrating a situation in which the information processing device 11 according to the second embodiment notifies the relative information. Firstly, the output unit 140 outputs an audio 512 corresponding to the position relative information indicating that "the second cup 405 is placed at about the waist height in the direction of 1'o clock at the distance of five strides" (Step S131). Moreover, when the user U2 starts walking in the direction of an arrow, the output unit 140 outputs an audio 513 corresponding to the auxiliary relative information indicating that "the second cup 405 is about the size of the palm and similar to the cup you possess" (Step S132). Furthermore, the output unit 140 outputs an audio 514 saying "pay attention as the cup has become too hot to hold, and be careful as there is a table nearby" (Step S133). With that, the user U2 becomes able to recognize, in an easy-to-understand manner, that the reference term "this" included in the speech by the user U3 points to the fourth cup 415.

Once the relative information notification operation is performed, it marks the end of the operations illustrated in FIG. 15. Till now, the explanation was given about the operations performed in the information processing system 2 according to the second embodiment.

Herein, the explanation was given about the case in which the user U2 has the user characteristics of the adult user U1A. However, when the user U2 has the user characteristics of the child user U1B, as explained in the first embodiment, the converting unit 136 converts the object information regarding the second cup 405 into relative information corresponding to the user characteristics of the child user U1B.

Meanwhile, there are times when the user U2 may have some particular condition (for example, physical disability). For example, there are times when the user U2 may have defect in color perception due to which all objects appear blue to him or her. In that case, in the memory unit 120, the fact about such defect in color perception can be stored as the user characteristics. For example, in the situation illustrated in FIG. 12, assume that the fourth cup 415 is blue. Moreover, assume that the user U3 utters the voice 511 saying "take this blue object along". In that case, since all objects appear blue to the user U2, he or she may not be able to understand "this blue object" uttered by the user U3.

In that case too, the converting unit 136 converts the object information regarding the second cup 405 into relative information corresponding to the user characteristics of the user U2. For example, the converting unit 136 generates information indicating that "a blue object is placed at about the waist height in the direction of 1'o clock at the distance of five strides" as the object information. The audio indicating that information is output from the output unit 140. Since the audio includes the expression "blue object", even if the user U2 has defect in color perception, he or she can easily recognize which object is the "blue object" included in the voice 511 of the user U3.

In this way, in the information processing system 2 according to the second embodiment, even if a user has a particular condition such as physical disability as explained above, he or she becomes able to recognize the surrounding information in a more easy-to-understand manner. Although the example given above is about the case in which the user has defect in color perception, that is not the only possible case. Alternatively, even if the user has constriction of the visual field due to which the visual field becomes constricted from the edges or becomes irregularly constricted, the information processing system 2 according to the second embodiment can output the relative information in such a way that the user is able to easily recognize the surrounding information in an easy-to-understand manner.

### <<2.3. Effect>>

In the second embodiment, it is determined whether or not there is voice activity in the sounds generated around the user U2 (Step S101). If it is determined that there is voice activity (Yes at Step S101); then, at Step S115 performed later, the converting unit 136 converts the surrounding information into relative information. That is, the converting unit 136 converts the surrounding information into relative information, with the utterance of the user U3 serving as the trigger. As a result, the user U2 becomes able to easily recognize the surrounding information that the user U3 is attempting to inform the user U2 by uttering it.

Moreover, in the information processing device 11 according to the second embodiment, there is a benefit also to the user U3 who utters information. For example, after the user U3 utters information, there are times when he or she cannot determine whether the user U2 has heard the utterance. Moreover, there are times when precise communication of the details to be instructed to the user U2 is a hassle for the user U3. In such cases too, the user U3 becomes able to instruct the user U2 who, for example, only casts a glance toward the detected objects and, even if information including a reference term is uttered, does not look (or is not able to look) at the detected object pointed by the reference term. Generally, a person often utters information containing reference terms. In the information processing device 11 according to the second embodiment, the user U3 becomes able to easily instruct other users by uttering information containing reference terms. Moreover, even if the user U2 is not looking (or is not able to look) at the detected object pointed by the reference term, he or she still becomes able to recognize the detected term that is instructed by the user U3 by uttering it. As a result, the user U2 becomes able to recognize, with more ease, the action he or she should take.

Moreover, in the second embodiment, it is determined whether or not a reference term is included in the voice involved in voice activity (Step S104). If it is determined that a reference term is included (Yes at Step S104); then, at Step S115 performed later, the converting unit 136 converts the surrounding information into relative information. That is, the converting unit 136 converts the surrounding information into relative information, with the utterance including a reference term by the user U3 serving as the trigger. For example, typically, a reference term such as "that over there" or "this" is used differently depending on the distance between the detected object pointed by the reference term and the user U3. More particularly, the reference term "that over there" is used when pointing an object that is farther than the distance indicated by the reference term "this". For that reason, when a reference term is included in the utterance of the user U3, the detected object pointed by him or her becomes more explicit, thereby resulting in more accurate recognition of the detected object. For that reason, the user U2 becomes able to recognize the object information regarding the detected object with more accuracy.

### <3. Application examples>

Given below is the explanation of application examples of the embodiments of the application concerned.

### <<3.1. First application example>>

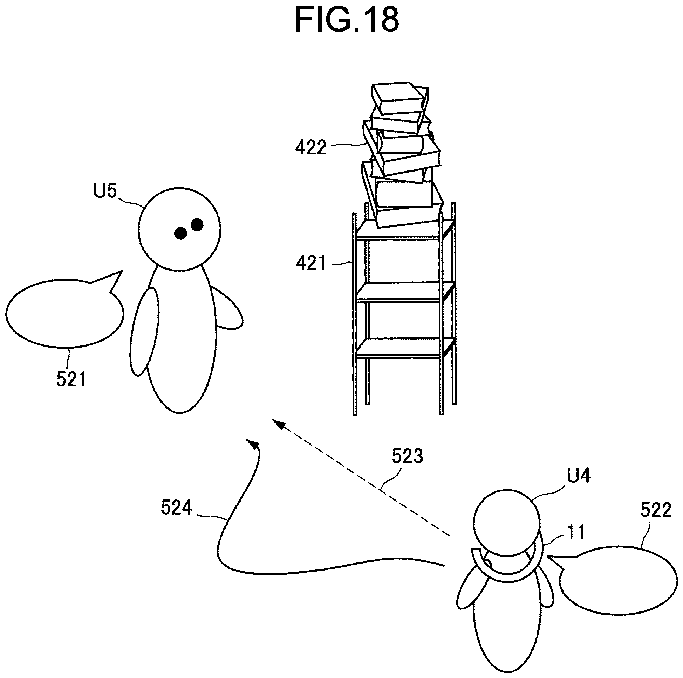

Explained below with reference to FIG. 18 is a first application example. FIG. 18 is a diagram illustrating a situation according to the first application example. In the situation according to the first application example, a user U4 intends to walk toward a user U5. The user U4 is wearing the information processing device 11 that is practically identical to the information processing device 11 according to the second embodiment. Moreover, although not illustrated in FIG. 18, to the information processing device 11, the server 21 that is practically identical to the server 21 according to the second embodiment is connected via a network. Thus, the information processing device 11 and the server 21 constitute the information processing system 2.

The user U4 intends to walk toward the position of the user U5 via a first route 523 illustrated using a dashed line. However, a rack 421 is placed on the right side of the first route 523, and books 422 are stacked in an unstable manner on the topmost shelf of the rack 421. At that time, the user U5 utters a voice 521 saying "it is dangerous there" to the user U4.

At that time, the recognizing unit 230 recognizes that the reference term "there" included in the voice 521 points to the books 422. Moreover, the converting unit 136 converts the object information regarding the books 422 into relative information. Furthermore, the selecting unit 137 selects the books 422 as the notification object. Consequently, the output unit 140 outputs the relative information regarding the books 422.

At that time, the information processing device 11 outputs, for example, an audio 522 indicating that "objects are placed above the head height in the direction of 2'o clock at the distance of five strides". With that, the user U4 becomes able to easily understand the information indicating that objects are placed at about the head height along the first route 523 passing by the rack 421. As a result, the user U4 becomes able to recognize, in an easy-to-understand manner, the possibility of collision of the head with the books if the first route 523 is taken. Hence, in order to avoid collision of the head with the books, the user U4 can walk toward the user U5 by taking a second route 524 that is farther from the rack 421 and the books 422. Hence, the user U4 is prevented from colliding with the books 422. In this way, according to the first application example, the information processing device 11 can notify the user U5 of the information that enables avoiding the danger. Particularly, also to a user who has difficulty in determining the danger based on visual information (for example, a user having a particular condition such as impaired vision, or an infant, or an elderly user), the information processing device 11 can notify the information that enables avoiding the danger. That is, to such a user too, the information processing device 11 can suggest the action to be taken to avoid the danger.

Herein, the explanation is given for an example in which the objects about which the user U5 issues an alert are the books 422 stacked on the rack 421. However, that is not the only possible case. Alternatively, for example, the object about which an alert is issued can be a robot vacuum cleaner that has the height below the knees and that automatically cleans the floor while moving around. In that case, the information processing device 11 outputs, for example, an audio 522 indicating that "a mobile object is present at the feet in the direction of 2'o clock at the distance of five strides" as relative information. As a result, the user U4 becomes able to recognize, in an easy-to-understand manner, that an object is present at the low position near the feet. That enables the user U4 to move around in such a way that there is no collision with the robot vacuum cleaner. Thus, the danger of a collision with the robot vacuum cleaner is kept in check. Meanwhile, in case the user U5 does not utter the voice 521 saying "it is dangerous there", then the recognizing unit 230 can recognize, from the image information, that the robot vacuum cleaner is the detected object having a high level of danger; and the selecting unit 137 can communicate the relative information about the robot vacuum cleaner to the output control unit 138. In that case too, since the relative information about the robot vacuum cleaner is output from the output unit 140, the user becomes able to move around in such a way that there is no collision with the robot vacuum cleaner.

### <<3.2. Second application example>>

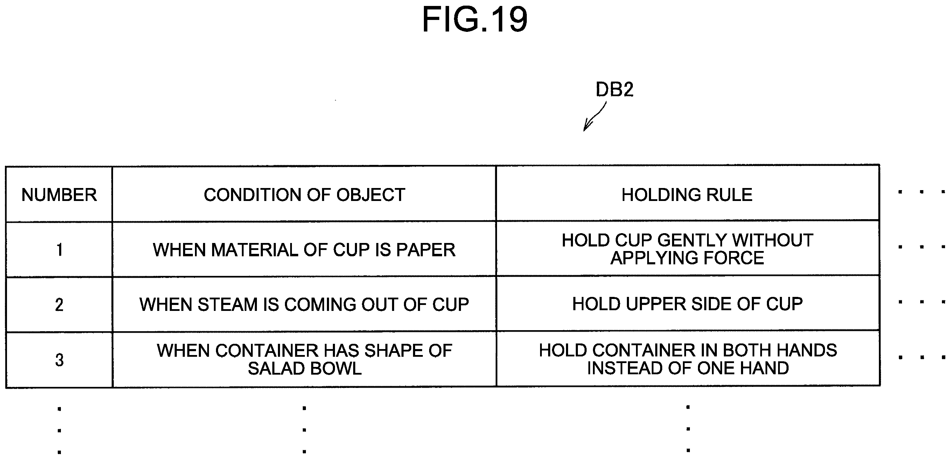

In a second application example, the user is wearing the information processing device 10 that has practically identical configuration to the configuration of the information processing device 10 according to the first embodiment. Moreover, the information processing device 10 is connected to the server 20 via the network 30. Thus, the information processing device 10 and the server 20 constitute the information processing system 1. As compared to the first embodiment, the second application example differs in the way that the memory unit 120 of the information processing device 10 is used to store a holding rule database DB2 as the user characteristic information. The holding rule database DB2 is a database in which the rule for holding an object is defined according to the condition of that object. Explained below with reference to FIG. 19 is the holding rule database DB2.

FIG. 19 is a diagram illustrating the holding rule database DB2 according to the second application example. As illustrated in FIG. 19, in the holding rule database DB2, the condition of an object is associated to the holding rule for that object. For example, the condition of an object numbered "1" indicates "when the material of the cup is paper". If a paper cup is held with force, then it is likely to get crushed. In that regard, in the condition of the object numbered "1", the holding rule for that object indicates to "hold the cup gently without applying force". The output unit 140 outputs relative information corresponding to that rule, so that the user becomes able to recognize the way of holding the cup in an easy-to-understand manner. Hence, the user holds the cup gently without applying force, and a situation in which the cup gets crushed when held is prevented from occurring.

The condition of an object numbered "2" indicates "when steam is coming out of the cup". When steam is coming out of the cup, it may imply that a hot drink is poured in the cup thereby making the cup hot. In that case, if the center of the cup is held, it may cause a burn injury to the cup-holding hand of the user. In that regard, regarding the holding condition of the object numbered "2", the holding rule indicates that "hold the upper side of the cup". The output unit 140 outputs relative information corresponding to that rule, so that the user holds the upper side of the cup thereby a preventing a situation in which the user gets a burn injury. The condition of an object numbered "3" indicates "when the container has the shape of a salad bowl". If a container has a salad put into it and if the container is held with only one hand, then the container may tilt and the salad may spill out. In that regard, in the condition of the object numbered "3", the holding rule indicates that "hold the container with both hands instead of one hand". The output unit 140 outputs relative information corresponding to that rule, so that the user holds the container with both hands and prevents the salad from spilling out of the container. In this way, in the information processing device 11 according to the second application example, since relative information is output in a corresponding manner to a holding rule defined in the holding rule database DB2, the user becomes able to recognize the way of holding the concerned object.

Meanwhile, the holding rules can be generated by learning the actions of the user in the normal domestic life. Moreover, the holding-related information generated by learning the actions of the user can be added to an already-built holding rule database. For example, if the user has been holding a container having the shape of a salad bowl with both hands at the lower side, then the rule numbered "3" indicating that "hold the container with both hands instead of one hand" can be added to the holding rule database DB2.

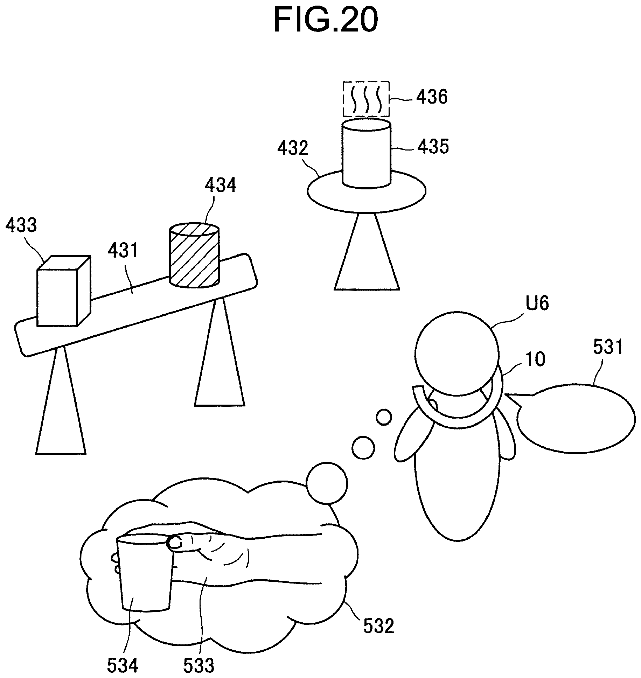

Explained below with reference to FIG. 20 is a situation in which the information processing system 1 according to the second application example outputs relative information. FIG. 20 is a diagram illustrating a situation according to the second application example. A user U6 is wearing the information processing device 10 around the neck. Moreover, on the anterior side of the user U6, a fifth table 431 and a sixth table 432 are placed. Furthermore, on the fifth table 431, a third stationary article 433 is placed along with a fifth cup 434 with oblique strokes. On the sixth table 432, a cup 435 is placed. In the cup 435, it is assumed that hot water is poured and steam 436 is coming out of the cup 435.

Explained below with reference to FIG. 6 are the operations performed in the information processing system 1 according to the second application example. Regarding the operations that are practically identical to the operations performed in the information processing system 1 according to the first embodiment, the explanation is not given again.

Firstly, the relative information generation operation is performed (Step S110). Regarding the relative information generation operation, the explanation is given with reference to the flowchart illustrated in FIG. 7. Firstly, the sensor unit 110 detects the surrounding situation of the user U6 (Step S111). At that time, the sensor unit 110 obtains image information capturing the cup 435 and the steam 436, which is coming out of the cup 435.

Then, the recognizing unit 210 performs the recognition operation (Step S112). At that time, the general object recognizing unit 211 recognizes that the cup 435 captured in the image information is made of paper and that the steam 436 is coming out of the cup 435. Moreover, the temperature recognizing unit 212 recognizes that the cup 435 is hot. Furthermore, the position recognizing unit 213 recognizes the position information of the cup 435 with reference to the user U6. Moreover, based on the fact that the cup 435 is hot and that the steam 436 is coming out of the cup 435, the danger level estimating unit 214 recognizes that the cup 435 has a high level of danger.

Subsequently, the integrating unit 216 generates surrounding information (Step S113). More particularly, the integrating unit 216 integrates the information indicating the material of the cup 435 and the fact that the steam 436 is coming out of the cup 435 as recognized by the general object recognizing unit 211, the information about the temperature of the cup 435 as recognized by the temperature recognizing unit 212, the information about the position information of the cup 435 as recognized by the position recognizing unit 213, and the information about the level of danger of the cup 435 as estimated by the danger level estimating unit 214; and generates object information regarding the cup 435. Moreover, the integrating unit 216 generates object information regarding the other detected objects other than the cup 435, and generates surrounding information by integrating such sets of object information.

Then, the converting unit 131 converts the surrounding information into relative information (Step S114). Herein, the object information regarding the cup 435 is converted into relative information based on the holding rule database DB2. For example, the converting unit 131 converts the object information regarding the cup 435 into way-of-holding relative information such as "hold the upper side gently without applying force so that the cup is not crushed" that instructs the way of holding the cup 435. Meanwhile, in an identical manner to the first embodiment, the converting unit 131 can convert the object information regarding the cup 435 not only into the way-of-holding relative information, but also into the position relative information, the auxiliary relative information, and the danger relative information. Once the converting unit 131 converts the surrounding information into relative information, it marks the end of the operation at Step S110.

Then, the selecting unit 132 performs the notification object selection operation (Step S120). Herein, the selecting unit 132 selects, as the notification object, the cup 435 that is estimated to have a high level of danger based on the fact that the cup 435 is hot and the steam 436 is coming out of it.

Subsequently, the relative information notification operation is performed (Step S130). At that time, the output unit 140 in the information processing device 10 outputs an audio 531 indicating that "hold the upper side gently without applying force so that the cup is not crushed" as the way-of-holding relative information. With that, the user U6 becomes able to visualize an image 532 of holding the upper side of the cup 435 with a hand 533. Accordingly, the user U6 holds the upper side of the cup 435 so as to prevent the danger of a burn injury attributed to, for example, holding the center of the cup 435. Meanwhile, as illustrated in the flowchart in FIG. 8, in an identical manner to the first embodiment, the output unit 140 can output the position relative information, the auxiliary relative information, and the danger relative information in identical order to the order in the first embodiment. In that case, there is no particular restriction on the timing at which the output unit 140 outputs the way-of-holding relative information. For example, the output unit 140 can output the way-of-holding information after outputting the danger level relative information. Till now, the explanation was given about the operations performed in the information processing system 1 according to the second application example.

Meanwhile, herein, the explanation was given about an example in which the hot cup 435 is placed on the sixth table 432. However, that is not the only possible case and alternatively, for example, a salad bowl that is a container having salad put into it can be placed on the sixth table 432. In that case, based on the holding rule numbered "3" as defined in the holding database DB2 stored in the memory unit 120, the converting unit 136 generates way-of-holding relative information. The output unit 140 outputs, for example, an audio indicating "do not use only one hand and hold the lower side" as the audio related to the way-of-holding relative information. With that, the user U6 becomes able to recognize the way of holding of the salad bowl in an easy-to-understand manner. Hence, the user U6 can hold the lower side of the salad bowl with both hands so that the salad does not spill out of the salad bowl.

### <<3.3. Third application example>>

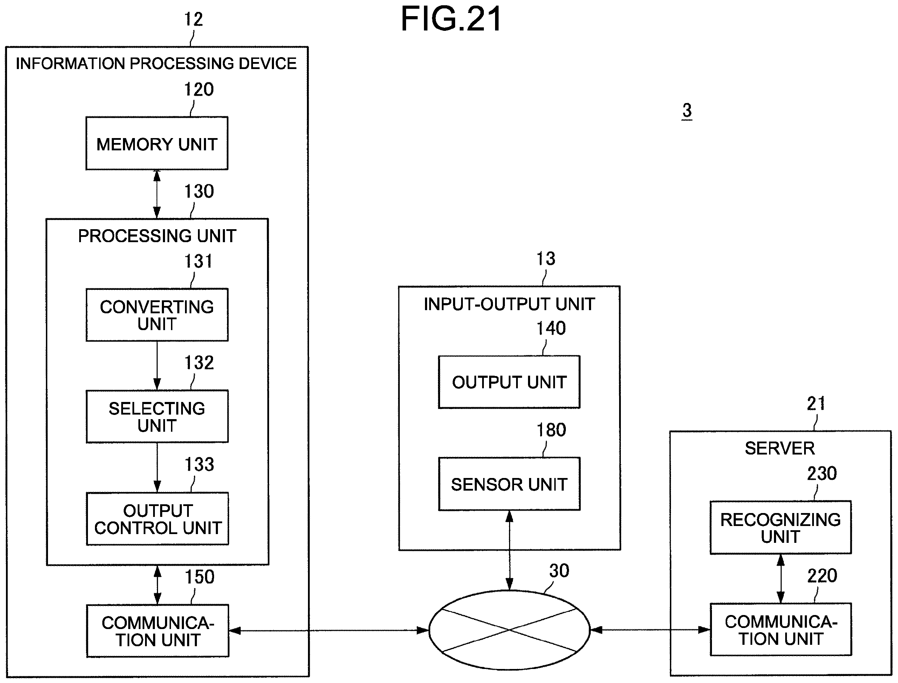

In a third application example, unlike in the first and second embodiments, a sensor unit 180 is kept independent of an information processing device 12. Explained below with reference to FIG. 21 is an information processing system 3 according to the third application example. FIG. 21 is a diagram illustrating a configuration of the information processing system 3 according to the third application example. The information processing system 3 includes the information processing device 12, an input-output unit 13, and the server 21. The information processing device 12, the input-output unit 13, and the server 21 are connected to each other by the network 30. The sensor unit 180 according to the third application example not only has the functions of the sensor unit according to the first and second embodiments, but also has the function of sending and receiving a variety of information. The output control unit 133 according to the third application example communicates, to the communication unit 150, the signals for controlling the output unit 140 included in the input-output unit 13. The signals are then sent to the output unit 140 of the input-output unit 13 via the network 30. As a result, the relative information is output from the output unit 140.

In the third application example, the user wears only the input-output unit 13 that includes the sensor unit 180 and the output unit 140. Hence, the amount of processing performed by the device (the input-output unit 13) worn by the user can be held down to the minimum. Meanwhile, the functional units of the information processing device 12 and the functional units of the server 21 can be provided in only a single device.

### <4. Hardware configuration>

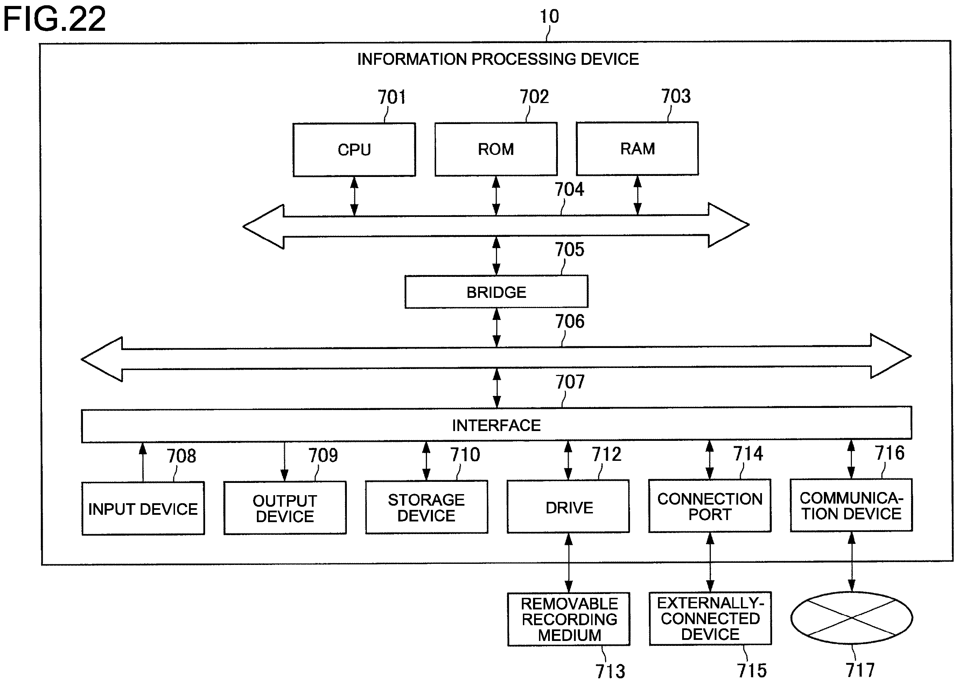

With reference to FIG. 22, given below is the detailed explanation of an exemplary hardware configuration of the information processing device 10 that constitutes the information processing system 1 according to the embodiments of the application concerned. FIG. 22 is a functional block diagram illustrating an exemplary hardware configuration of the information processing device 10 that constitutes the information processing system 1 according to the embodiments of the application concerned.

The information processing device 10 that constitutes the information processing system 1 according to the embodiments mainly includes a CPU 701, a ROM 702, and a RAM 703. Moreover, the information processing device 10 further includes a host bus 704, a bridge 705, an external bus 706, an interface 707, an input device 708, an output device 709, a storage device 710, a drive 712, a connection port 714, and a communication device 716.

The CPU 701 functions as an arithmetic processing device and a control device, and controls some or all of the operations in the information processing device 10 according to various programs recorded in the ROM 702, the RAM 703, the storage device 710, or a removable recording medium 713. The ROM 702 is used to store programs and operation parameters to be used by the CPU 701. The RAM 703 is used to temporarily store the programs used by the CPU 701 and the parameters that undergo changes during the execution of the programs. These constituent elements are connected to each other by the host bus 704 that is configured with an internal bus such as a CPU bus. Herein, for example, the converting unit 131, the selecting unit 132, and the output control unit 133 illustrated in FIG. 2 can be configured using the CPU 701.

The host bus 704 is connected to the external bus 706 such as a PCI (Peripheral Component Interconnect/Interface) bus via the bridge 705. Moreover, to the external bus 706, following devices are connected via the interface 707: the input device 708, the output device 709, the storage device 710, the drive 712, the connection port 714, and the communication device 716.

The input device 708 is an operating unit such as a mouse, a keyboard, a touch-sensitive panel, buttons, switches, a lever, or a pedal operated by the user. Alternatively, the input device 708 can be a remote control device (what is called a remote controller) in which infrared light or other types of radio waves are used, or can be an externally-connected device 715 such as a cellular phone or a PDA compatible to the operations of the information processing device 10. Moreover, for example, the input device 708 is configured with an input control circuit that generates input signals based on the information input by the user from the abovementioned operating unit and outputs the input signals to the CPU 701. The user of the information processing device 10 can operate the input device 708 and input a variety of data in the information processing device 10 or issue processing instructions to the information processing device 10.

The output device 709 is configured with a device capable of notifying the user about the obtained information in a visual or auditory manner. Examples of the output device 709 include a display device such as a CRT display device, a liquid crystal display device, a plasma display device, an EL display device, or a lamp; a sound output device such as a speaker or headphones; and a printer device. The output device 709 outputs, for example, the result of various operations performed in the information processing device 10. More particularly, a display device displays, using texts and images, the result of various operations performed in the information processing device 10. A sound output device converts audio signals, which are made of the reproduced voice data or acoustic data, into analog signals, and outputs the analog signals.

The storage device 710 is a data storage device configured as an example of the memory unit of the information processing device 10. Examples of the storage device 710 include a magnetic memory device such as an HDD (Hard Disk Drive), a semiconductor memory device, an optical magnetic device, and a magneto-optical memory device. The storage device 710 is used to store the programs to be executed by the CPU 701, and to store a variety of data. For example, the memory unit 120 illustrated in FIG. 2 can be configured using the storage device 710.

The drive 712 is a recording medium reader-writer, and can be installed in the information processing device 10 or can be externally attached to the information processing device 10. The drive 712 reads information that is recorded in the removable recording medium 713, such as a magnetic disk, an optical disk, a magneto-optical disk, or a semiconductor memory, inserted therein; and outputs the information to the RAM 703. Moreover, the drive 712 is capable of writing records in the removable recording medium 713, such as a magnetic disk, an optical disk, a magneto-optical disk, or a semiconductor memory, inserted therein. Examples of the removable recording medium 713 include a DVD media, an HD-DVD media, or a Blu-ray (registered trademark) media. Alternatively, the removable recording medium 713 can be a CompactFlash (registered trademark) (CF), a flash memory, or an SD memory card (Secure Digital memory card). Still alternatively, the removable recording medium 713 can be an IC card (Integrated Circuit card) having a contactless IC chip installed therein, or can be an electronic device.

The connection port 714 is a port for establishing direct connection with the information processing device 10. Examples of the connection port 714 include a USB (Universal Serial Bus) port, an IEEE 139 port, and an SCSI (Small Computer System Interface) port. Other examples of the connection port 714 include an RS-232C port, an optical audio terminal, and an HDMI (registered trademark) (High-Definition Multimedia Interface) port. When the externally-connected device 715 is connected to the connection port 714, the information processing device 10 obtains a variety of data directly from the externally-connected device 715 and provides a variety of data to the externally-connected device 715.

The communication device 716 is, for example, a communication interface configured with a communication device to be connected to a communication network (network) 717. For example, the communication device 716 is a communication card for a wired LAN (Local Area Network) or a wireless LAN, or for Bluetooth (registered trademark), or for WUSB (Wireless USB). Alternatively, the communication device 716 can be a router for optical communication, a router for ADSL (Asymmetric Digital Subscriber Line), or a modem for various types of communication. For example, the communication device 716 can send and receive signals between the Internet and other communication devices according to a predetermined protocol such as the TCP/IP. The communication network 717 that is connected to the communication device 716 is configured using a network connected in a wired or wireless manner. Examples of the communication network 717 include the Internet, a home LAN, infrared communication, radio wave communication, and satellite communication.

Till now, the explanation was given about an exemplary hardware configuration that enables implementation of the functions of the information processing device 10 constituting the information processing system 1 according to the embodiments of the application concerned. The constituent elements can be configured using general-purpose materials, or can be configured using hardware specialized in their functions. Thus, according to the technical level of the time of implementing the embodiments, the hardware configuration can be appropriately varied. Meanwhile, although not illustrated in FIG. 22, various configurations corresponding to the information processing device 10, which constitutes the information processing system 1, are obviously included.

Meanwhile, a computer program meant for implementing the functions of the information processing device 10, which constitutes the information processing system 1 according to the embodiments, can be written and installed in a personal computer. Alternatively, a computer-readable recording medium in which such a computer program is stored can be provided. Examples of the recording medium include a magnetic disk, an optical disk, a magneto-optical disk, and a flash memory. Alternatively, the computer program can be distributed via, for example, a network without involving any recording medium. Meanwhile, there is no particular restriction on the number of computers in which the computer program is to be executed. For example, the computer program can be executed in a coordinated manner among a plurality of computers (for example, a plurality of servers).

### <5. Supplementary explanation>

Although the application concerned is described above in detail in the form of preferred embodiments with reference to the accompanying drawings; the technical scope of the application concerned is not limited to the embodiments described above. That is, the application concerned is to be construed as embodying all modifications such as other embodiments, additions, alternative constructions, and deletions that may occur to one skilled in the art that fairly fall within the basic teaching herein set forth.

For example, the exemplary configuration of the information processing device 10 and the server 20 illustrated in FIG. 2 is not limited to the example illustrated in FIG. 2. Alternatively, except for the sensor unit 110 or the output unit 140, some or all of the other functional units of the information processing device 10 can be installed in the server 20; or some or all of the functional units of the server 20 can be installed in the information processing device 10. Moreover, regarding the exemplary configuration of the information processing device 11 and the server 21 illustrated in FIG. 13, and regarding the exemplary configuration of the information processing device 12 and the server 21 illustrated in FIG. 21; the configuration is not limited to those examples as in the case of the example illustrated in FIG. 2. That is, the functional units can be installed in the information processing device and the server in an appropriate manner.

In the second embodiment, the converting unit 136 converts the surrounding information into relative information, with an action of the user U3 serving as the trigger. However, that is not the only possible case. Alternatively, the converting unit 136 can convert the surrounding information into relative information, with an action of the user U2 who is wearing the information processing device 11 serving as the trigger. For example, the converting unit 136 can convert the surrounding information into relative information, with the action of approaching the fourth cup 415 performed by the user U2 serving as the trigger. In that case too, the output unit 140 can output the position relative information, the auxiliary relative information, and the danger relative information in a stepwise manner. With that, the relative information regarding the detected object approached by the user U2 is output, thereby enabling the user U2 to recognize the surrounding information that is more relevant to him or her.

In the embodiments of the application concerned, the explanation is given mainly for the example in which, from among the user characteristics, the physical information is used as the condition information regarding the condition of that user. However, that is not the only possible case. Alternatively, for example, information indicating the mental condition of the user can be used as the condition information. In that case, for example, according to the mental condition of the user, a danger level recognizing unit estimates the level of danger of the detected object. For example, depending on the things desired by the user (for example, the favorite things), the converting unit can convert the surrounding information into relative information. Moreover, the selecting unit can select, as the notification object, the detected object that matches with the mental condition of the user. With that, the relative information corresponding to the mental condition of the user (for example, the relative information related to the favorite things) is output. Hence, the surrounding information corresponding to the mental condition of the user (for example, the surrounding information related to the favorite things) is presented in a more easy-to-understand manner for the user.

Meanwhile, the effects described in the present written description are only explanatory and exemplary, and are not limited in scope. That is, in addition to or in place of the effects described above, the technology disclosed in the application concerned enables achieving other effects that may occur to one skilled in the art.

Meanwhile, a configuration as explained below also falls within the technical scope of the application concerned.
(1) An information processing device comprising a converting unit that converts
   surrounding information, which is generated based on sensor information coming from a sensor unit and which represents primary information regarding surrounding situation of a first user, into
   relative information, which represents secondary information corresponding to user characteristics of the first user, based on the user characteristics.
(2) The information processing device according to (1), wherein
   the surrounding information contains object information regarding a detected object which is detected by the sensor unit, and
   the converting unit converts the object information into the relative information corresponding to the detected object.
(3) The information processing device according to (2), wherein
   the surrounding information contains position information of the detected object, with reference to position of the first user, and
   the converting unit converts the position information into the relative information regarding positional relationship between the first user and the detected object.
(4) The information processing device according to any one of (1) to (3), wherein
   the user characteristics include condition information regarding condition of the first user, and
   the converting unit converts the surrounding information into the relative information corresponding to the condition information.
(5) The information processing device according to (4), wherein
   the user characteristics contain, as the condition information, physical information representing information regarding physical features of the first user, and
   the converting unit converts the surrounding information into the relative information corresponding to the physical information.
(6) The information processing device according to any one of (1) to (5), wherein the converting unit converts the surrounding information into the relative information, with an action of a second user, who is different than the first user, serving as trigger.
(7) The information processing device according to (6), wherein the converting unit converts the surrounding information into the relative information, with an utterance of the second user serving as trigger.
(8) The information processing device according to (7), wherein the converting unit converts the surrounding information into the relative information, with an utterance including a reference term by the second user serving as trigger.
(9) The information processing device according to any one of (1) to (8), wherein the converting unit converts the surrounding information into the relative information, with an action of the first user as detected by the sensor unit serving as trigger.
(10) The information processing device according to any one of (1) to (9), further comprising an output control unit that controls an output unit which outputs the relative information, wherein
   according to transition of the output, the output control unit controls the output unit to output the relative information.
(11) The information processing device according to (10), wherein
   the converting unit converts the surrounding information in a segmented manner into a plurality of sets of relative information, and
   the output control unit outputs the plurality of sets of relative information in a stepwise manner.
(12) The information processing device according to (11), wherein, based on an action of the first user, the output control unit controls the output unit to output the plurality of sets of relative information in a stepwise manner.
(13) The information processing device according to (11) or (12), wherein
   the converting unit converts the surrounding information into
      first-type relative information regarding distance between the first user and a detected object that is detected by the sensor unit, and
      second-type relative information regarding condition of the detected object, and
   the output control unit controls the output unit to output the second-type relative information after outputting the first-type relative information.
(14) The information processing device according to any one of (10) to (13), wherein the output control unit makes the output unit selectively output relative information regarding the detected object having highest level of danger around the first user from among a plurality of detected objects.
(15) The information processing device according to any one of (1) to (14), wherein the converting unit converts the surrounding information into the relative information that contains information regarding danger around the first user.
(16) An information processing method comprising converting
   surrounding information, which is generated based on sensor information coming from a sensor unit and which represents primary information regarding surrounding situation of a first user, into
   relative information, which represents secondary information corresponding to user characteristics of the first user, based on the user characteristics.

### Reference Signs List

- 10, 11: information processing device
- 110, 111, 180: sensor unit
- 120: memory unit
- 130, 135: processing unit
- 131, 136: converting unit
- 132, 137: selecting unit
- 133, 138: output control unit
- 140: output unit
- 13: input-output unit
- 20, 21: server
- 210, 230: recognizing unit

## Claims

1. An information processing device comprising a converting unit that converts
surrounding information, which is generated based on sensor information coming from a sensor unit and which represents primary information regarding surrounding situation of a first user, into
relative information, which represents secondary information corresponding to user characteristics of the first user, based on the user characteristics.

2. The information processing device according to claim 1, wherein
the surrounding information contains object information regarding a detected object which is detected by the sensor unit, and
the converting unit converts the object information into the relative information corresponding to the detected object.

3. The information processing device according to claim 2, wherein
the surrounding information contains position information of the detected object, with reference to position of the first user, and
the converting unit converts the position information into the relative information regarding positional relationship between the first user and the detected object.

4. The information processing device according to claim 1, wherein
the user characteristics include condition information regarding condition of the first user, and
the converting unit converts the surrounding information into the relative information corresponding to the condition information.

5. The information processing device according to claim 4, wherein
the user characteristics contain, as the condition information, physical information representing information regarding physical features of the first user, and
the converting unit converts the surrounding information into the relative information corresponding to the physical information.

6. The information processing device according to claim 1, wherein the converting unit converts the surrounding information into the relative information, with an action of a second user, who is different than the first user, serving as trigger.

7. The information processing device according to claim 6, wherein the converting unit converts the surrounding information into the relative information, with an utterance of the second user serving as trigger.

8. The information processing device according to claim 7, wherein the converting unit converts the surrounding information into the relative information, with an utterance including a reference term by the second user serving as trigger.

9. The information processing device according to claim 1, wherein the converting unit converts the surrounding information into the relative information, with an action of the first user as detected by the sensor unit serving as trigger.

10. The information processing device according to claim 1, further comprising an output control unit that controls an output unit which outputs the relative information, wherein
according to transition of the output, the output control unit controls the output unit to output the relative information.

11. The information processing device according to claim 10, wherein
the converting unit converts the surrounding information in a segmented manner into a plurality of sets of relative information, and
the output control unit outputs the plurality of sets of relative information in a stepwise manner.

12. The information processing device according to claim 11, wherein, based on an action of the first user, the output control unit controls the output unit to output the plurality of sets of relative information in a stepwise manner.

13. The information processing device according to claim 11, wherein
the converting unit converts the surrounding information into
first-type relative information regarding distance between the first user and a detected object that is detected by the sensor unit, and
second-type relative information regarding condition of the detected object, and
the output control unit controls the output unit to output the second-type relative information after outputting the first-type relative information.

14. The information processing device according to claim 10, wherein the output control unit makes the output unit selectively output relative information regarding the detected object having highest level of danger around the first user from among a plurality of detected objects.

15. The information processing device according to claim 1, wherein the converting unit converts the surrounding information into the relative information that contains information regarding danger around the first user.

16. An information processing method comprising converting
surrounding information, which is generated based on sensor information coming from a sensor unit and which represents primary information regarding surrounding situation of a first user, into
relative information, which represents secondary information corresponding to user characteristics of the first user, based on the user characteristics.
